# EUROPÄISCHE PATENTANMELDUNG

(11) **EP 2 423 621 A2**
(43) Veröffentlichungstag der Anmeldung: **29.02.2012**
(21) Anmeldenummer: 11176872.7
(22) Anmeldetag: 08.08.2011
(51) Int. Cl.: F24J 2/52

(54) **Profilschiene für Haltebügel**

(30) Priorität: 26.08.2010 DE 102010039838
(71) Anmelder: BB Stanz-und Umformtechnik GmbH, 06536 Berga (DE)
(72) Erfinder: Humm, Siegfried, 74214 Schöntal Westernhausen (DE); Blesch, Günther, 97957 Assamstadt (DE)
(74) Vertreter: Dilg, Haeusler, Schindelmann Patentanwaltsgesellschaft mbH

(57) **Zusammenfassung**

Profilschiene (110, 3200) zum Halten eines Gegenstands und zum Befestigen an einem an einer Unterlage befestigbaren Haltebügel (130, 3100), wobei die Profilschiene (110, 3200) einen Aufnahmeabschnitt (112, 1104), der zum Halten des Gegenstands eingerichtet ist, einen Montageabschnitt (114, 1106), der zum Montieren an dem Haltebügel (130, 3100) eingerichtet ist, und einen Auflageabschnitt (116, 118, 1108) aufweist, der zum Auflegen der Profilschiene (100, 3200) auf den Haltebügel (130, 3100) und zum vorläufigen Ineingriffnehmen des Haltebügels (130, 3100) vor dem endgültigen Montieren des Haltebügels (130, 3100) an dem Montageabschnitt (114, 1106) eingerichtet ist.

## Beschreibung

Die Erfindung betrifft eine Profilschiene zum Halten eines Gegenstands und zum Befestigen an einem an einer Unterlage befestigbaren Haltebügel. Die Erfindung betrifft ferner eine Befestigungsanordnung zum Befestigen eines Gegenstands an einer Unterlage. Die Erfindung betrifft ein Verfahren zum Befestigen eines Gegenstands an einer Unterlage. Die Erfindung betrifft außerdem eine Verwendung einer Profilschiene oder einer Befestigungsanordnung zum Befestigen eines Solarpaneels an einer Unterlage.

Solarbefestiger werden eingesetzt, um Solarzellen an einem Hausdach zu befestigen.

Aus dem Stand der Technik sind eine Reihe von Solarbefestigern bekannt, siehe zum Beispiel DE 202009002134 U1, DE 102005043957 B3, DE 202009000960 U1 oder DE 202007015887 U1.

DE 202008016000 U1 offenbart einen geteilt ausgebildeten Dachhaken mit einem Fußteil zur Herstellung einer Verbindung mit einer

Dachunterkonstruktion und mit einem mit dem Fußteil verbindbaren Hakenteil, das am anderen Ende über einen Anschluss für die Befestigung eines über der Dachhaut befindlichen Traggerüstes oder einer Baueinheit verfügt.

DE 10 2006 000 090 A1 offenbart einen Befestigungsvorrichtung für eine Befestigung eines Trägerprofils an einer Dachunterkonstruktion, wobei das Trägerprofil von der Dachunterkonstruktion beabstandet ist. Die Befestigungsvorrichtung weist einen Dachhaken auf, der eine Befestigungsplatte und einen im Wesentlichen parallel zur Befestigungsplatte angeordneten Festlegeabschnitt umfasst. Die Befestigungsvorrichtung weist ferner ein Befestigungsmittel für das Trägerprofil auf. Das Befestigungsmittel, welches sich an dem Festlegeabschnitt befindet, umfasst eine Befestigungsschraube und ein Halteelement, das einen Halteabschnitt für das Trägerprofil sowie eine Öffnung für die Befestigungsschraube aufweist.

DE 10 2004 057 041 A1 offenbart ein Dachmontagesystem für Solarmodule. Das Dachmontagesystem weist ein Befestigungselement sowie eine Montageschiene auf. Das Befestigungselement weist an einem ersten Ende eine Kopfplatte auf, welche an einem Sparren einer Dachkonstruktion angeschraubt werden kann. An dem anderen Ende 6 des Befestigungselements ist die Montageschiene angebracht. Zwischen den beiden Enden befindet sich ein c-förmiges Mittelstücks und ein freier Schenkel. An der Montageschiene ist ein Solarmodul unter Verwendung einer Haltepratze und einer Schraube befestigt.

DE 101 24 048 A1 offenbart eine Dachkonstruktion zum Tragen von Solarstrom-Modulen auf Hausdächern. Die Dachkonstruktion umfasst zwei gekreuzt verlaufende Schienen, die jeweils ein einseitig offenes Kastenprofil aufweisen und die mittels einer Klemmeinrichtung miteinander verbunden sind. Die Klemmeinrichtung umfasst ein abgekröpftes Klemmprofil, welches mittels einer Schraube an einer Schiene derart angebracht ist, dass sich eine Abkröpfung des Klemmprofils mit der anderen Schiene in Eingriff befindet. Die andere Schiene, welche auch als Unterschiene bezeichnet wird, ist mittels eines geschwungenen Dachhakens an einem Dachsparren befestigt. An der Schiene ist mittels einer Schraube und einer Halteklammer ein Solarstrom-Modul angebracht.

Die Montage von Gegenständen unter Verwendung von herkömmlichen Befestigern mit Haltebügel ist häufig aufwendig und erfordert in vielen Fällen mindestens zwei Monteure.

Es ist eine Aufgabe der vorliegenden Erfindung, eine stabile Befestigung eines Gegenstands an einer Unterlage zu ermöglichen, wobei zur Befestigung bereits ein Monteur ausreichend sein soll.

Diese Aufgabe wird durch eine Profilschiene zum Halten eines Gegenstands und zum Befestigen an einem an einer Unterlage (insbesondere einem Dach) befestigbaren Haltebügel, durch eine Befestigungsanordnung zum Befestigen eines Gegenstands an einer Unterlage, durch ein Verfahren zum Befestigen eines Gegenstands an einer Unterlage und durch eine Verwendung einer Profilschiene oder einer Befestigungsanordnung zum Befestigen eines Solarpaneels an einer Unterlage mit den Merkmalen gemäß den unabhängigen Patentansprüchen gelöst.

Gemäß einem Ausführungsbeispiel der vorliegenden Erfindung ist eine Profilschiene zum Halten eines Gegenstands und zum Befestigen an einem an einer Unterlage befestigbaren Haltebügel geschaffen, wobei die Profilschiene einen Aufnahmeabschnitt, der zum Halten des Gegenstands eingerichtet ist, einen Montageabschnitt, der zum Montieren an dem Haltebügel eingerichtet ist, und einen Auflageabschnitt aufweist, der zum Auflegen auf den Haltebügel vor Montieren bzw. Befestigen des Haltebügels an dem Montageabschnitt eingerichtet ist.

Gemäß einem anderen Ausführungsbeispiel der vorliegenden Erfindung ist eine Befestigungsanordnung zum Befestigen eines Gegenstands an einer Unterlage bereitgestellt, wobei die Befestigungsanordnung eine Profilschiene mit den oben beschriebenen Merkmalen zum Halten des Gegenstands und zum Befestigen an einem an der Unterlage befestigbaren Haltebügel aufweist. Die Befestigungsanordnung weist ferner den Haltebügel auf.

Gemäß noch einem anderen Ausführungsbeispiel der vorliegenden Erfindung ist ein Verfahren zum Befestigen eines Gegenstands an einer Unterlage geschaffen, wobei bei dem Verfahren ein Haltebügel an der Unterlage befestigt wird, ein Auflageabschnitt einer Profilschiene auf den Haltebügel vor Montieren bzw. Befestigen des Haltebügels an einem Montageabschnitt der Profilschiene aufgelegt wird, der Montageabschnitt der Profilschiene an dem Haltebügel montiert bzw. befestigt wird, und der Gegenstand an einem Aufnahmeabschnitt der Profilschiene gehalten wird.

Gemäß einem weiteren Ausführungsbeispiel der vorliegenden Erfindung wird eine Profilschiene mit den oben beschrieben Merkmalen oder eine Befestigungsanordnung mit den oben beschrieben Merkmalen zum Befestigen eines Solarpaneels (als einem Beispiel für den Gegenstand) an einem Dach (als einem Beispiel für die Unterlage) verwendet.

Im Rahmen dieser Beschreibung kann unter dem Begriff "Profilschiene" insbesondere eine starre Struktur verstanden werden, die einen Aufnahmeabschnitt aufweisen kann, an dem ein zu haltender Gegenstand (wie ein Solarpaneel oder ein Zwischenstück) befestigt werden kann. Insbesondere kann die Profilschiene einen Führungskanal oder eine Führungsnut aufweisen, entlang welchem oder welcher ein aufzunehmender Nutenstein eingeschoben und formschlüssig aufgenommen werden kann. Zum Beispiel kann eine solche Profilschiene ein Strangpressprofil sein, zum Beispiel aus Aluminium gefertigt, das bei geringem Gewicht eine hohe Stabilität aufweist. Insbesondere kann die Profilschiene als langgestreckter Körper ausgeführt sein, dessen Länge in einer Haupterstreckungsrichtung mindestens fünfmal, insbesondere mindestens zehnmal, so groß sein kann wie eine Erstreckung in einer Montagerichtung. Unter einer Montagerichtung kann in diesem Zusammenhang eine Richtung verstanden werden, entlang welcher die Profilschiene relativ zu dem Haltebügel bewegt werden kann, um eine Höheneinstellung vorzunehmen. Zum Beispiel kann eine Profilschiene eine Länge von mindestens 1 m, insbesondere von mindestens 3 m, weiter insbesondere von mindestens 6 m, aufweisen. Die Profilschiene kann zum Beispiel mit mindestens zwei Haltebügeln an der Unterlage befestigt sein. Die Profilschiene kann als über einer Dachhaut anzuordnendes Traggerüst zum Tragen des Gegenstands bezeichnet werden.

Unter dem Begriff "Gegenstand" kann insbesondere eine körperliche Struktur verstanden werden, die an einer Unterlage befestigt werden soll. Ein solcher Gegenstand kann zum Beispiel ein Solarpaneel, ein Anzeigeschild, ein elektronisches Anzeigegerät, etc., sein, das zum Beispiel an einem Dach (insbesondere einem Schrägdach) eines Bauwerks befestigt werden soll.

Unter dem Begriff "Unterlage" kann insbesondere eine Basisstruktur verstanden werden, die als Grundlage für die Montage des Gegenstands dient. Zum Beispiel kann eine solche Basisstruktur das Dach (insbesondere eine Dachunterkonstruktion oder Dachsparren) eines Hauses, aber auch die Wand eines Hauses, eine Steele, etc., sein.

Unter dem Begriff "Haltebügel" kann insbesondere eine Haltestruktur verstanden werden, die in einem ersten (unteren) Bereich an einer Unterlage bzw. an einem Bodenteil befestigt werden kann und in einem zweiten (oberen) Bereich zum Tragen der Profilschiene eingesetzt werden kann. Somit kann der Haltebügel zum Stützen und zum Überbrücken eines Abstands zwischen der Unterlage bzw. dem Bodenteil und dem Gegenstand dienen. Der Haltebügel kann mit der Unterlage direkt, also unmittelbar, verbunden sein oder kann alternativ mit dem Boden- oder Fußteil verbunden sein, das wiederum unmittelbar auf der Unterlage befestigt werden kann.

Im Rahmen dieser Beschreibung kann unter dem Begriff "Auflegen" insbesondere verstanden werden, dass die Profilschiene vor einem dauerhaften, betriebsfesten Befestigen zunächst provisorisch auf den Haltebügel aufgelegt werden kann und dort lose aufgestützt bleiben kann. Nach Einnahme einer solchen semistabilen Position (zum Beispiel einer Rastposition) kann dann die Profilschiene an eine endgültige Position hin justiert werden, an der dann eine dauerhafte Befestigung an dem Haltebügel erfolgen kann.

Im Rahmen dieser Beschreibung kann unter dem Begriff "Bodenteil" insbesondere ein Bauteil verstanden werden, das direkt an einem Dach, insbesondere an einem Dachsparren (das aus Holz gefertigt sein kann), montiert werden kann. Ein solches Bodenteil kann somit einen Bodenplattenabschnitt aufweisen, der Durchgangslöcher zum Durchführen von Schrauben, wie zum Beispiel Holzschrauben, zum Befestigen des Bodenteils an dem Dach haben kann. Ferner kann das Bodenteil einen winkelig, insbesondere rechtwinkelig, zu der Bodenplatte angeordneten Befestigungsabschnitt aufweisen, der an einem bodenseitigen Endabschnitt eines Haltebügels befestigt werden oder sein kann.

Im Rahmen dieser Beschreibung kann unter dem Begriff "Befestigungsmittel" insbesondere jede körperliche Struktur verstanden werden, die durch zwei zu befestigende Komponenten hindurchgeführt werden kann. Als Befestigungsmittel können zum Beispiel Schrauben, Nägel, Nieten oder dergleichen verwendet werden. Insbesondere kann zumindest ein Teil der Befestigungsmittel vorteilhaft als selbstbohrende und/oder schneidende Schrauben ausgebildet sein.

Die aneinander anzubringenden Komponenten sind jeweils ein Paar, das gebildet sein kann aus Bodenteil und Haltebügel, Haltebügel und einer Profilschiene, einer Profilschiene und einer anderen Profilschiene, und einer Profilschiene und dem Solarpaneel.

Unter einer "selbstbohrenden Schraube" wird im Rahmen dieser Anmeldung insbesondere eine Schraube verstanden, die durch eine oder beide der zu verbindenden Komponenten insbesondere ohne vorherige Vorbohrung hindurchgebohrt werden kann, womit sich die Schraube durch die jeweilige Komponente oder Komponenten ihr eigenes Loch hindurchbohrt. Eine selbstbohrende Schraube kann auch als selbstschneidende Schraube ausgebildet sein. Unter einer "selbstschneidenden Schraube" wird im Rahmen dieser Anmeldung insbesondere eine Schraube verstanden, die durch eine oder beide der zu verbindenden Komponenten hindurchgeführt werden kann und sich dabei ihr eigenes Gewinde schneidet.

Gemäß einem Ausführungsbeispiel der vorliegenden Erfindung ist eine Montage eines Gegenstands an einer Unterlage ermöglicht, die auch ein einziger Monteur bequem vornehmem kann. Dies kann mittels einer einfach aufgebauten und leichtgewichtig ausbildbaren Profilschiene erreicht werden, die von einem damit verbindbaren Haltebügel separat vorgesehen ist. Bei herkömmlichen Befestigungsanordnungen sind in der Regel zwei Monteure erforderlich, von denen einer eine Profilschiene vor dem Montieren an einem Haltebügel hält, und der andere zum Beispiel mittels Schraubens die Befestigung vornimmt. Im Gegensatz dazu kann erfindungsgemäß die Profilschiene zunächst auf den Haltebügel definiert aufgesetzt und vorläufig an diesem abgestützt werden, so dass die Gewichtskraft der Profilschiene in diesem Zwischenzustand von dem Haltebügel aufgenommen werden kann. Nach einer solchen provisorischen Anordnung der Profilschiene an dem Haltebügel kann dann - gegebenenfalls nach einer kurzen Hebebewegungeine dauerhafte Befestigung von der Profilschiene an dem Haltebügel erfolgen.

Im Weiteren werden zusätzliche Ausgestaltungen der Profilschiene beschrieben. Diese gelten auch für die Befestigungsanordnung, das Verfahren und die Verwendung.

Gemäß einem exemplarischen Ausführungsbeispiel der Erfindung kann der Aufnahmeabschnitt eine Nutenschiene aufweisen. Eine solche Nutenschiene kann einen Nutenstein aufnehmen, der zum Beispiel Teil des zu befestigenden Gegenstands ist. Die Profilschiene ist in einem einfachen Ausführungsbeispiel aus einer Nutenschiene und einem Montageschenkel zur Verbindung mit einem Dachhaken gebildet. Der Nutenstein kann zum Beispiel ein Solarmodul tragen. In eine solche Nutenschiene kann ein Nutenstein seitlich eingeschoben werden und dann formschlüssig bzw. kraftschlüssig gehalten werden, beispielsweise mittels einer Schraube.

Der Aufnahmeabschnitt kann aber auch ein (bezogen auf die Unterlage horizontaler) Steg sein.

Gemäß einem exemplarischen Ausführungsbeispiel der Erfindung kann der Aufnahmeabschnitt zum Halten eines Solarpaneels eingerichtet sein. Ein Solarpaneel kann ein Photovoltaikmodul oder ein Solarthermiemodul sein. Ein Photovoltaikmodul wandelt Licht der Sonne in elektrische Energie um. Als funktionelle Bestandteile enthält es mehrere Solarzellen. Unter Solarthermie versteht man die Umwandlung der Sonnenenergie in nutzbare Wärmeenergie. Insbesondere kann ein Solarpaneel eine flächige plattenartige Anordnung sein, die an einer Unterlage wie zum Beispiel einem Dach gehalten werden soll.

Gemäß einem exemplarischen Ausführungsbeispiel der Erfindung kann der Montageabschnitt der Profilschiene einen Montageschenkel aufweisen, der parallel zu einem Eingriffsschenkel des Auflageabschnitts verlaufend angeordnet ist. Zusätzlich zu einem Aufliegen der Profilschiene auf dem Haltebügel zur Einschränkung einer vertikalen Bewegung kann der Eingriffsschenkel somit eine seitliche Bewegungseinschränkung der Profilschiene bewirken, da der Haltebügel dann in seitlicher Richtung zwischen Montageschenkel und Eingriffsschenkel aufnehmbar ist und seitlich verrutschgeschützt die Profilschiene vertikal stützen kann. Dies fördert zusätzlich die Montierbarkeit der Profilschiene durch einen einzigen Monteur. Insbesondere kann durch den Eingriffsschenkel und eine dazu beispielsweise orthogonal angeordnete Auflagefläche des Auflageabschnitts eine zwischenzeitliche Auflage der Profischiene auf dem Haltebügel gewährleistet werden. Insbesondere kann ein "U-Profil" durch Montageschenkel, Auflagefläche und Eingriffsschenkel gebildet werden. Alternativ kann ein "L-Profil" durch Montageschenkel und eine Auflagefläche gebildet werden.

Gemäß einem exemplarischen Ausführungsbeispiel der Erfindung kann ein Montageschenkel des Haltebügels zwischen dem Montageschenkel der Profilschiene und dem Eingriffsschenkel einführbar sein. Die beiden Montageschenkel können aufeinander angepasste Platten (insbesondere unterschiedlicher Breite) sein, an denen sich Haltebügel und Profilschiene nach Befestigung dauerhaft berühren.

Gemäß einem exemplarischen Ausführungsbeispiel der Erfindung kann der Auflageabschnitt eine durch einen Abstandssteg bereitgestellte Auflagefläche aufweisen, auf welche die Profilschiene aufgelegt werden und ruhen kann, bevor eine eigentliche Verschraubung mit dem Haltebügel erfolgt. Bevorzugt ist der Abstandssteg rechtwinklig zu dem Montageabschnitt orientiert. Dadurch kann die Profilschiene besonders einfach auf den Haltebügel aufgelegt werden.

Gemäß einem exemplarischen Ausführungsbeispiel der Erfindung kann der Aufnahmeabschnitt als flächiger Plattenbereich oder als Steg ausgestaltet sein, welcher senkrecht zu dem Montageabschnitt orientiert ist, so dass eine Querprofilschiene von oben auf den Aufnahmeabschnitt auflegbar ist. Die Querprofilschiene kann dabei für eine weitere Stabilisierung der Profischiene ggf. in Kombination mit anderen Profischienen sorgen.

Gemäß einem exemplarischen Ausführungsbeispiel der Erfindung kann die Profilschiene einen zu dem Eingriffsschenkel parallel angeordneten weiteren Eingriffsschenkel aufweisen, wobei ein Bereich zwischen dem Eingriffsschenkel und dem weiteren Eingriffsschenkel zum Ineingriffnehmen eines Fixierelements (zum Beispiel einer Fixierplatte) ausgebildet sein kann. Das Fixierelement kann als separate Komponente zum Fixieren der Profilschiene an dem Haltebügel vorgesehen werden. Die beiden Eingriffsschenkel können parallel oder abgewinkelt zueinander angeordnet sein oder können aus gebogenen Strukturen gebildet sein. Die beiden Eingriffsschenkel können jeweils als Steg ausgebildet sein, wobei eine Länge der Stege unterschiedlich sein kann.

Ein separates, an der Profilschiene anbringbares Fixierelement kann durch einen Monteur auf die Profischiene aufgesteckt werden. Anschließend kann ein Verbindungselement, wie zum Beispiel eine Schraube, durch das Fixierelement, den Haltebügel und die Profilschiene hindurchgeführt und befestigt werden, womit eine Montage fertiggestellt werden kann. Damit ist eine Verstärkung der Verbindung erreichbar.

Gemäß einem exemplarischen Ausführungsbeispiel der Erfindung kann der Bereich zwischen dem Eingriffsschenkel und dem weiteren Eingriffsschenkel zum formschlüssigen und/oder reibschlüssigen Aufnehmen (insbesondere Einklipsen) eines Hakens des Fixierelements ausgebildet sein. Unter dem Begriff "formschlüssig" kann in diesem Zusammenhang verstanden werden, dass eine Verbindung zweier Verbindungspartner (Eingriffsschenkel und Haken) durch das gegenseitige Hintergreifen der Verbindungspartner hergestellt wird, also durch deren Formgebung bewirkt wird. Unter einem "Reibschluss" kann eine Verbindungsart verstanden werden, die auf Reibung zwischen zwei aneinander grenzenden Partnern beruht.

Der Auflageabschnitt kann als Eingriffsabschnitt ausgestaltet sein, der zum Ineingriffnehmen des Haltebügels vor Montieren des Haltebügels an dem Montageabschnitt eingerichtet ist. Dieses Ineingriffnehmen kann eine vorläufige bzw. vorübergehende provisorische Kopplung zwischen Haltebügel und Profilschiene bewirken. Im Rahmen dieser Beschreibung kann unter dem Begriff "vorläufiges Ineingriffnehmen" insbesondere verstanden werden, dass die Profilschiene vor einem dauerhaften, betriebsfesten Befestigen zunächst provisorisch auf den Haltebügel aufgesetzt werden kann und dort lose gehalten bleiben kann. Anders ausgedrückt kann damit ein vorläufiges Einhängen eines Eingriffsabschnitts der Profilschiene an dem Haltebügel bezeichnet werden.

Im Weiteren werden zusätzliche Ausgestaltungen der Befestigungsanordnung beschrieben. Diese gelten auch für die Profilschiene, das Verfahren und die Verwendung.

Gemäß einem exemplarischen Ausführungsbeispiel der Erfindung kann der Montageabschnitt der Profilschiene einen Montageschenkel aufweisen, der an einen Montageschenkel des Haltebügels formschlüssig und/oder reibschlüssig anlegbar ausgebildet sein. Gemäß obiger Definition der Begriffe formschlüssig bzw. reibschlüssig können die Formen der Montageschenkel aufeinander angepasst sein. Zum Beispiel können die beiden Montageschenkel korrespondierende Strukturmerkmale aufweisen, die aufeinander so angepasst sind, dass durch Anlegen der beiden Montageschenkel aneinander deren Strukturmerkmale in Eingriff miteinander gebracht werden und dann nur ein geringer oder gar kein Anpressdruck erforderlich ist, um eine provisorische Befestigung der Montageabschnitte aneinander zur Erleichterung der nachfolgenden dauerhaften Befestigung durch einen Monteur zu ermöglichen. Auch bei dauerhafter Befestigung ist vorteilhaft, dass schon eine geringe Anpresskraft der Schraube senkrecht zur Gewichtskraft selbst eine große Gewichtskraft aushalten kann.

Insbesondere können die Montageschenkel an einander zugewandten Flächen korrespondierende Strukturmerkmale aufweisen derart, dass die Strukturmerkmale in einer Mehrzahl von unterschiedlichen Höhenzuständen aneinander formschlüssig anlegbar ausgebildet sind. Somit können die Strukturmerkmale neben ihrer Aufgabe als Haltemittel auch Stufen bilden, von denen jede einer einstellbaren Höhe entspricht. Dadurch kann der Gegenstand in einer über einen gewissen Bereich veränderbaren Höhe über der Unterlage montiert werden, und es können Höhenunterschiede ausgeglichen werden.

Gemäß einem exemplarischen Ausführungsbeispiel der Erfindung können die Strukturmerkmale ein Sägezahnprofil, ein Wellenprofil und/oder ein Rechteckprofil aufweisen. Bei dem Einsatz solcher mit geringem Aufwand ausbildbarer Strukturmerkmale kann bereits ein kleiner Anpressdruck ausreichend sein, um eine provisorische Befestigung zu erreichen. Ferner ist eine ausreichend feine Höheneinstellbarkeit mit derartigen Strukturmerkmalen auf einfache und intuitive Weise ermöglicht.

Die Befestigungsanordnung kann ein Verbindungselement aufweisen, das zum Befestigen des Haltebügels an der Profilschiene mittels Durchführens des Verbindungselements durch den Haltebügel und durch die Profilschiene eingerichtet ist. Ein solches Verbindungselement kann zum Beispiel eine Schraube, ein Nagel oder eine Niete sein. Bevorzugt ist eine selbstbohrende und/oder eine selbstschneidende Schraube, die sich zum Beispiel durch die Profilschiene hindurch bohren kann bzw. sich selbst ein Gewinde schneiden kann. Eine solche Schraube kann durch ein Loch, insbesondere ein Langloch, des Haltebügels geführt, durch die Profilschiene gedreht und optional mit einer Mutter gehalten werden.

Die Befestigungsanordnung kann ein Fixierelement aufweisen (insbesondere eine Fixierplatte). Das Fixierelement kann, um den Haltebügel an der Profilschiene zu fixieren, an der Profilschiene anbringbar und nachfolgend an dem Haltebügel befestigbar sein. Indem zum Fixieren ein separates Fixierelement vorgesehen wird, kann dieses an einer gewünschten Längsposition an der Profilschiene angebracht werden. Damit kann die Montage durch einen Monteur weiter vereinfacht werden, da in dem Fixierelement bereits ein Schraubenloch gebildet oder sogar schon eine Schraube vormontiert sein kann, und somit eine Verschraubposition intuitiv sichtbar ist. Ferner wird dadurch die Verbindung verstärkt.

Gemäß einem exemplarischen Ausführungsbeispiel der Erfindung können das Fixierelement und die Profilschiene korrespondierende Steckmerkmale aufweisen, so dass das Fixierelement an die Profilschiene ansteckbar ist. Dies kann zum Beispiel durch ein Verklipsen erfolgen. Ein derartiges Fixierelement kann an einer Unterseite der Profilschiene, insbesondere einer Nutenschiene, aufgenommen werden. Somit kann eine Kraftunterstützung für eine einfache Montage bereitgestellt werden.

Gemäß einem exemplarischen Ausführungsbeispiel der Erfindung kann das Fixierelement ein Verbindungselement enthalten, das zum Befestigen des Haltebügels an der Profilschiene mittels Durchführens des Verbindungselements durch den Haltebügel und durch die Profilschiene eingerichtet ist. Anders ausgedrückt kann das kleinteilige Verbindungselement an dem Fixierelement schon vormontiert sein, so dass die Anzahl einzelner Bauteile gering gehalten werden kann. Zum Beispiel kann ein flexibler Ring an dem Verbindungselement angebracht sein, durch den eine Schraube als Verbindungselement hindurchgeführt und gehalten sein kann. Nach Anstecken des Fixierelements an die Profilschiene kann das Verbindungselement dann durch Profilschiene und Haltebügel durchgetrieben werden. Ein Monteur kann mit einer Hand die Profilschiene an einer gewünschten Höhenposition gegenüber dem Haltebügel halten und kann mit der anderen Hand das Verbindungselement durch das Fixierelement in Profilschiene und Haltebügel versenken.

Gemäß einem exemplarischen Ausführungsbeispiel der Erfindung kann das Verbindungselement eine Schraube, insbesondere eine selbstbohrende und/oder eine selbstschneidende Schraube, aufweisen. Eine solche Schraube kann zum Beispiel über einen Gummiring an dem Fixierelement vorkonfektioniert sein. Dies begünstigt wiederum die Montierbarkeit der Befestigungsanordnung durch einen einzigen Monteur.

Gemäß einem exemplarischen Ausführungsbeispiel der Erfindung kann das Verbindungselement durch ein Langloch des Haltebügels und durch die Profilschiene hindurchführbar sein. Die Profilschiene kann in einem Ausführungsbeispiel ebenfalls ein oder mehrere Löcher zum Durchführen des Verbindungselements aufweisen. Alternativ kann das Verbindungselement durch die Profilschiene, zum Beispiel selbstschneidend und/oder selbstbohrend, hindurchgeführt werden. Der Haltebügel kann ein oder mehrere Langlöcher aufweisen, oder kann alternativ eine Anordnung mehrerer Rundlöcher aufweisen.

Gemäß einem exemplarischen Ausführungsbeispiel der Erfindung kann der Haltebügel ein Dachhaken sein, der an einem Dach als der Unterlage befestigbar ist. Unter einem Dachhaken kann eine hakenförmige Struktur verstanden werden, die in einem Bereich direkt an einem Dach (oder an einem an einem Dach angebrachten Fußelement) und in einem anderen Bereich an der Profilschiene befestigt werden kann, um einen von der Profilschiene getragenen Gegenstand an dem Dach zu montieren.

Gemäß einem exemplarischen Ausführungsbeispiel der Erfindung kann der Haltebügel einen Befestigungsabschnitt und einen Montageabschnitt aufweisen. Der Befestigungsabschnitt kann zum Befestigen direkt an der Unterlage oder an einem an der Unterlage befestigbaren Fuß- oder Sockelelement eingerichtet sein. Der Montageabschnitt kann zum Montieren an dem Montageabschnitt der Profilschiene eingerichtet sein.

Gemäß einem exemplarischen Ausführungsbeispiel der Erfindung kann der Haltebügel zwischen dem Befestigungsabschnitt und dem Montageabschnitt einen Abstandsabschnitt aufweisen. Unter einem Abstandsabschnitt oder Abstandshalterabschnitt kann eine Strebe oder dergleichen verstanden werden, die einen vorgebbaren Abstand zwischen der Unterlage und dem Gegenstand aufrechterhält. Befestigungsabschnitt, Montageabschnitt und Abstandsabschnitt können einstückig ausgebildet sein.

Gemäß einem exemplarischen Ausführungsbeispiel der Erfindung können sich der Befestigungsabschnitt und der Montageabschnitt im Wesentlichen entlang einer ersten Richtung erstrecken, die zu einer zweiten Richtung abgewinkelt, insbesondere im Wesentlichen rechtwinklig abgewinkelt, angeordnet ist, entlang welcher zweiten Richtung der Abstandsabschnitt im Wesentlichen verläuft. Somit können Befestigungsabschnitt und Montageabschnitt zueinander parallel verlaufen und senkrecht zu dem Abstandsabschnitt verlaufen.

Gemäß einem exemplarischen Ausführungsbeispiel der Erfindung können der Befestigungsabschnitt, der Montageabschnitt und der Abstandshalter jeweils aneinandergrenzende Plattenabschnitte aufweisen, die seitlich abgewinkelte Versteifungskanten aufweisen. Zum Beispiel können die Plattenabschnitte von Befestigungsabschnitt, Montageabschnitt und Abstandshalter aus einem gebogenen Blech gefertigt sein, das im Wesentlichen Z-förmiger oder stufenförmiger Gestalt sein kann. Um die Robustheit einer solchen Struktur zu erhöhen, können seitliche Bereiche des Blechs zu Versteifungskanten umgebogen sein.

Gemäß einem exemplarischen Ausführungsbeispiel der Erfindung weist die Befestigungsanordnung ein Bodenteil zum Anbringen an der Unterlage auf, wobei der Haltebügel zum Anbringen an dem Bodenteil mittels eines ersten Befestigungsmittels eingerichtet ist. Die Profilschiene kann zum Anbringen an dem Haltebügel mittels eines zweiten Befestigungsmittels eingerichtet ist. Zumindest eines dieser Befestigungsmittel kann eine selbstbohrende (bevorzugt zusätzlich selbstschneidende) Schraube sein, die durch zumindest eine der jeweiligen aneinander anzubringenden Komponenten schraubbar ist. Dadurch ist eine Befestigungsanordnung bereitgestellt, bei der das Verbinden benachbarter Komponenten, insbesondere das Verbinden aller oberhalb eines Bodenteils angeordneter Komponenten, mittels selbstbohrender Schrauben bewerkstelligt wird. Dadurch ist eine Einmannmontage ermöglicht, da aufwendige und teure Befestigungssysteme vermieden sein können. Es ist ausreichend, die beiden jeweils miteinander zu verbindenden Komponenten aneinander zu halten und dann zum Beispiel mittels eines geeigneten Schraubendrehers die selbstbohrende Schraube durch die beiden Komponenten hindurch zu bohren und dadurch aneinander zu befestigen. Selbst das vorherige Bilden einer Vorbohrung in einer der oder in beiden Komponenten kann dann entbehrlich sein. Durch die erfindungsgemäßen Maßnahmen kann der Montageaufwand verringert werden, da zumindest zwei Paare von Komponenten ausschließlich mittels selbstbohrender Schrauben verbunden werden. Die Anzahl von einem Monteur mitzuführenden Montageteilen kann dadurch sehr klein gehalten werden.

Gemäß einem Ausführungsbeispiel kann die selbstbohrende (bevorzugt zusätzlich selbstschneidende) Schraube einen Befestigungsbereich (insbesondere einen rostbeständigen Befestigungsbereich) haben, der im montierten Zustand innerhalb zumindest einer der aneinander anzubringenden Komponenten verbleiben kann. Ein Bohrbereich (insbesondere ein gehärteter Bohrbereich) der Schraube dient zum Durchbohren von mindestens einer der aneinander anzubringenden Komponenten. Eine solche Schraube weist insbesondere zwei getrennte Bereiche, nämlich den Befestigungsbereich und den Bohrbereich auf, die auf ihre jeweilige Funktion hin zugeschnitten sein können. Der Befestigungsbereich verbleibt dauerhaft im Inneren einer oder beider der zu verbindenden Komponenten, um deren Verbindung zu bewerkstelligen. Dieser Befestigungsbereich ist vorzugsweise rostbeständig, damit selbst dann, wenn die Solarpaneele und deren Befestigungsanordnung der Witterung ausgesetzt sind, eine dauerhafte und zuverlässige Verankerung sichergestellt werden kann. Der Bohrbereich hingegen ist nur während des Bohrens wichtig, und sollte deshalb gehärtet vorgesehen werden. Eine rostfreie Ausführung auch des Bohrbereichs ist vorteilhaft, aber nicht unbedingt erforderlich, da nach dem Bohren dieser Bohrbereich keine tragende Funktion mehr wahrnehmen muss.

Gemäß einem Ausführungsbeispiel kann die selbstbohrende Schraube einen Gewindeformbereich zwischen dem Befestigungsbereich und dem Bohrbereich aufweisen, der zum Schneiden eines Gewindes in mindestens einer der aneinander anzubringenden Komponenten eingerichtet sein kann. Ist zwischen dem Bohrbereich und dem Befestigungsbereich ein solcher Gewindeformbereich vorgesehen, so schneidet sich die Schraube in diesem Bereich ihr eigenes Gewinde beim schraubenden Durchdringen der zu verbindenden Komponenten. Eine Schraube, die auch diese Funktionalität erfüllt und somit erfindungsgemäß eingesetzt werden kann, ist zum Beispiel eine Schraube des Typs "Zebra *piasta"* der Firma Würth.

Gemäß einem Ausführungsbeispiel kann die selbstbohrende Schraube einstoffig gefertigt sein. Eine einstoffig gefertigte Schraube, das heißt eine aus einem einzigen durchgehenden Material gefertigte Schraube, ist kostengünstig herstellbar. Es hat sich gezeigt, dass auch eine Schraube, die zum Beispiel durchgängig aus demselben Stahlmaterial hergestellt ist, für die erfindungsgemäßen Zwecke ausreichend sein kann, beispielsweise wenn alle zu verbindenden Komponenten aus Aluminium bestehen.

Gemäß einem Ausführungsbeispiel kann die Schraube einen Kopfbereich zum Angreifen eines Schraubendrehers haben. Eine Sollbruchstelle (zum Beispiel ein mechanisch gezielt geschwächter Bereich) der Schraube kann zwischen dem Kopfbereich und einem restlichen Bereich der Schraube angeordnet und eingerichtet sein, bei Überschreitung einer vorgebbaren mechanischen Sollbelastung während des Montierens abzuscheren oder abzubrechen, womit der Kopfbereich von dem restlichen Bereich abtrennbar und die Schraube nicht mehr betätigbar ist. Durch Vorsehen einer solchen Sollbruchstelle kann ein effektiver Diebstahlschutz zum Vermeiden des unbefugten Entfernens eines montierten Gegenstands, zum Beispiel eines Solarpaneels, geschaffen werden. Die Schraube wird während des Montageprozesses einem so hohen Drehmoment oder einer sonstigen derart hohen Belastung ausgesetzt, dass sich deren Kopf von dem Rest abtrennt. Fehlt der Kopf, so ist die Schraube nicht mehr mit einem einfachen Schraubendreher aus den beiden zu verbindenden Komponenten herausdrehbar. Da Solarpaneele teuer sind und einer hohen Gefahr ausgesetzt sind, unbefugt entwendet zu werden, gewährleistet diese Maßnahme zusätzlich zu dem geringen Montageaufwand auch einen zuverlässigen Schutz vor Diebstahl des Solarpaneels. Die Sollbruchstelle kann zum Beispiel als ein Material geringerer geometrischer Dicke ausgeführt sein, die bei Überschreiten des Solldrehmoments den wirkenden Kräften nicht mehr standhalten kann. Ergänzend oder alternativ kann das Material der Sollbruchstelle ein anderes Material sein als eines, das für den Rest der Schraube verwendet wird, insbesondere ein weicheres bzw. weniger robustes Material. Somit ist erfindungsgemäß ein sicheres und modulares Befestigungssystem geschaffen, das Bohren, Befestigen und ggf. Abscheren eines Schraubenkopfes in einem einzigen Vorgang ermöglicht.

Gemäß einem Ausführungsbeispiel können das Bodenteil und/oder der Haltebügel und/oder die mindestens eine Profilschiene aus einem Material gefertigt sein, das eine geringere Härte (zum Beispiel Brinell-Härte) hat als die selbstbohrende (bevorzugt zusätzlich selbstschneidende) Schraube. Diese Ausgestaltung kommt einerseits einer leichten Montierbarkeit dieser Komponenten aneinander zugute, da die selbstbohrende Schraube oder die selbstbohrenden Schrauben mechanisch härter ist oder sind als das Material der zu befestigenden Komponenten und somit einfach die Komponenten ohne großen Kraftaufwand durchdringen kann. Gleichzeitig sind solche weniger harten Materialien für die zu befestigenden Komponenten in vielen Fällen auch geeignet, eine leichtgewichtige Befestigungsanordnung bereitzustellen, was hinsichtlich der auf ein Gebäude einwirkenden Belastung durch die montierten Solarpaneele oder dergleichen vorteilhaft ist.

Gemäß einem Ausführungsbeispiel können das Bodenteil, der Haltebügel und die mindestens eine Profilschiene aus Aluminium gefertigt sein. Aluminium ist ein vorteilhaft einsetzbares Leichtbaumaterial, das bei vertretbaren Kosten und guter Tragfähigkeit nur eine geringe mechanische Belastung auf ein Gebäude ausübt. Alternativ können die Komponenten aber auch aus Eisen, Stahl, Kunststoff oder dergleichen gefertigt werden.

Gemäß einem Ausführungsbeispiel kann die selbstbohrende Schraube aus Edelstahl gefertigt sein. Dieses Material hat eine ausreichende mechanische Härte, um bei einem Durchbohren der Komponenten den dort wirkenden Kräften standzuhalten. Allerdings können für die Schraube auch andere Materialien, wie zum Beispiel Eisen, Messing, Kupfer oder Aluminium verwendet werden.

Gemäß einem Ausführungsbeispiel kann die Befestigungsanordnung eine weitere oder zweite (insbesondere andersartig ausgestaltete) Profilschiene zum Halten des Gegenstands und Befestigen an der ersten Profilschiene mittels eines dritten Befestigungsmittels aufweisen. Die erste Profilschiene und diese weitere zweite Profilschiene können aneinander mittels eines vierten Befestigungsmittels montierbar sein. Die erste Profilschiene kann auch als Haltebügelprofilschiene bezeichnet werden, da diese mit dem Haltebügel verbunden wird. Die zweite Profilschiene kann auch als Querprofilschiene oder als Kreuzprofilschiene bezeichnet werden, da diese üblicherweise quer oder winkelig, insbesondere rechtwinkelig, zu der Haltebügelprofilschiene montiert wird und somit mit dieser eine überkreuzende Struktur bildet. Durch Montage der Haltebügelprofilschiene und der Querprofilschiene aneinander kann eine gitterartige oder matrixartige Struktur gebildet werden, die mit hoher mechanischer Stabilität Solarpaneele oder andere Gegenstände tragen kann.

Gemäß einem Ausführungsbeispiel kann die Befestigungsanordnung einen Schienenverbinder aufweisen, der auf erste Profilschienen und auf weitere oder zweite Profilschienen derart angepasst ist, dass mittels des Schienenverbinders wahlweise die ersten Profilschienen miteinander verbindbar sind oder die weiteren oder zweiten Profilschienen miteinander verbindbar sind. Mit einem solchen Schienenverbinder können zwei gleichartige Profilschienen, zum Beispiel zwei Haltebügelprofilschienen oder zwei Querprofilschienen, miteinander auf definierten Abstand verbunden werden. Dadurch kann flexibel eine sichere Montage auch auf Dächern erfolgen, deren Dimension nicht einem ganzzahligen Vielfachen der Länge einer der Profilschienen entspricht. Insbesondere kann zum Verbinden von zwei Haltebügelprofilschienen einerseits und zum Verbinden von zwei Querprofilschienen andererseits ein und derselbe Schienenverbinder verwendet werden, der deshalb auch als Universalschienenverbinder bezeichnet werden kann.

Gemäß einem Ausführungsbeispiel kann der Schienenverbinder an der Profilschiene oder an der weiteren Profilschiene mittels eines fünften Befestigungsmittels montierbar sein. Insbesondere kann auch diese Befestigung zwischen Schienenverbinder und zwei Profilschienen (zwei Querprofilschienen oder zwei Haltebügelprofilschienen) mittels selbstbohrender (bevorzugt zusätzlich selbstschneidender) Schrauben vorgenommen werden. Indem auch diese Komponenten miteinander mittels einer selbstbohrenden (bevorzugt zusätzlich selbstschneidenden) Schraube verbunden werden, ist es für einen Monteur ausreichend, nur eine sehr geringe Anzahl unterschiedlicher Bauelemente an einer Baustelle mit sich zu führen, mit denen universell viele oder sogar alle der zu verwendenden Komponenten verbunden werden können.

Gemäß einem Ausführungsbeispiel kann der Schienenverbinder an einer Außenseite eine Führungsnut aufweisen, in bzw. an welcher das fünfte Befestigungsmittel positionierbar und ausrichtbar ist, um nachfolgend den Schienenverbinder an der (ersten) Profilschiene mittels des fünften Befestigungsmittels zu montieren. Indem an dem Schienenverbinder erkennbar eine Führungsnut gebildet ist, ist einem Benutzer eine Verbindungsstelle zum Anbringen eines Befestigungsmittels intuitiv angezeigt. Ferner dient die Führungsnut auch als Stütze und Zentriermittel für die einzudrehende Schraube, was den Montageprozess weiter vereinfacht.

Gemäß einem Ausführungsbeispiel kann das vierte Befestigungsmittels und/oder das fünfte Befestigungsmittel eine selbstbohrende (bevorzugt zusätzlich selbstschneidende) Schraube sein. Vorzugsweise sind sowohl das vierte als auch das fünfte Befestigungsmittel jeweils eine selbstbohrende (bevorzugt zusätzlich selbstschneidende) Schraube, weiter vorzugsweise desselben Typs, womit der Montageaufwand und der Aufwand des Mitführens von bestimmten Bauelementen an einer Baustelle weiter reduziert wird.

Gemäß einem Ausführungsbeispiel kann der Schienenverbinder ein Außenprofil aufweisen, das korrespondierend zu einem Innenprofil der weiteren Profilschienen angepasst ist derart, dass der Schienenverbinder in die weiteren Profilschienen mindestens teilweise einschiebbar ist, um die weiteren Profilschienen in einem vorgebbaren Abstand voneinander zu verbinden. Gemäß dieser Ausgestaltung ist der Schienenverbinder entlang einer vorgebbaren Achse in die jeweilige Querprofilschiene einführbar, und zwar bevorzugt bis zu einer vorgebbaren Tiefe.

Gemäß einem Ausführungsbeispiel kann der Schienenverbinder eine Außenflächentextur aufweisen, die korrespondierend zu einer Außenflächentextur der Profilschienen angepasst ist derart, dass der Schienenverbinder formschlüssig an die Profilschienen anlegbar ist, um diese miteinander (unmittelbar angrenzend oder auf Abstand) zu verbinden. Durch eine solche Außenflächentextur kann durch einen einzigen Monteur der Schienenverbinder flexibel an eine korrespondierende Außenflächentextur der Haltebügelprofilschienen angelegt werden und dann vorzugsweise selbstbohrende (bevorzugt zusätzlich selbstschneidende) Schrauben zum Verbinden dieser beiden Komponenten durchgetrieben werden. Dies reduziert weiter den Montageaufwand.

Gemäß einem Ausführungsbeispiel kann die Befestigungsanordnung ein Kabelhalterungsmodul aufweisen, das einen Kabelhaltebereich zum Halten eines Kabels des Solarpaneels und einen Befestigungsbereich (insbesondere einen Steckbereich) zum Befestigen (insbesondere Anstecken) an einen korrespondierend zu dem Befestigungsbereich ausgestalteten Befestigungsbereich (insbesondere Steckbereich) der zumindest einen Profilschiene aufweist. Ein solches Kabelhalterungsmodul erfüllt die Aufgabe, unbefestigte Kabel eines Solarpaneels sicher zu verstauen und somit einerseits eine einwandfreie elektrische Funktion des Systems vorzusehen und andererseits eine Kabelführung in definierter Weise ausgestalten zu können. Ist in dem Kabelhalterungsmodul ein solches Kabel gehalten, so kann mittels des korrespondierenden Befestigungsbereichs das Kabelhalterungsmodul an einer entsprechenden Profilschiene, insbesondere an einer Haltebügelprofilschiene, befestigt werden.

Gemäß einem Ausführungsbeispiel kann das Kabelhalterungsmodul zwei mittels eines Stegs gekoppelte Hohlzylindersegmente aufweisen, die miteinander derart wirkverbunden sind, dass mittels Drückens des Kabels gegen den Steg die zwei Hohlzylindersegmente zum Bilden eines umfänglich geschlossenen Kabelaufnahmebereichs aufeinander zu schwenkbar sind. Die Hohlzylindersegmente, die im Querschnitt zum Beispiel eine kreissegmentförmige Gestalt haben können, dienen in ihrem verbundenen Zustand dem Umgreifen des Kabels und bilden vor dem Aufnehmen des Kabels eine Aufnahmeöffnung. Ein Benutzer kann nun mit einem Handgriff intuitiv das Kabel gegen den Steg drücken, womit es zu einer Klappbewegung der beiden Hohlzylindersegmente aufeinander zu kommt. Dadurch nimmt das Kabelhalterungsmodul das Kabel in seinem Inneren auf. Zuvor oder anschließend kann das nun mit dem Kabel versehene Kabelhalterungsmodul an der entsprechenden Profilschiene (oder an einer anderen Komponente) befestigt werden.

Gemäß einem Ausführungsbeispiel kann jedes der Hohlzylindersegmente einen (zum Beispiel ebenfalls stegartigen) Fortsatz aufweisen, wobei die Fortsätze eingerichtet sein können, bei Schwenken der zwei Hohlzylindersegmente das in dem Kabelaufnahmebereich aufgenommene Kabel gemeinsam zu zentrieren. Derartige stegartige Fortsätze vereinfachen somit weiter die Handhabung des Kabelhalterungsmoduls durch eine selbsttätige Zentrierung des Kabels innerhalb des Kabelhalterungsmoduls, da diese beidseitig gegen das in dem Kabelhalterungsmodul aufgenommene Kabel drücken, um dieses vor einem unerwünschten Bewegen innerhalb des Kabelhalterungsmoduls zu hindern. Dies erlaubt eine weiter verbesserte Kabelführung.

Gemäß einem Ausführungsbeispiel kann ein weiteres Hohlzylindersegment mit den beiden Hohlzylindersegmenten verbunden sein. Der Befestigungsbereich kann an dem weiteren Hohlzylindersegment vorgesehen sein. Das dritte Hohlzylindersegment dient als Stütz- und Verbindungselement für die anderen beiden Hohlzylindersegmente. Es kann einen größeren Durchmesser haben als die anderen beiden Hohlzylindersegmente. Um eine symmetrische Kraftübertragung zu erreichen, kann das Befestigungselement an zentraler Stelle an dem weiteren Hohlzylindersegment angeordnet sein.

Im Weiteren werden zusätzliche Ausgestaltungen des Verfahrens beschrieben. Diese gelten auch für die Profilschiene, die Befestigungsanordnung und die Verwendung.

Gemäß einem exemplarischen Ausführungsbeispiel der Erfindung kann die Profilschiene zunächst auf die Haltebügel aufgelegt werden, um diese vorzujustieren, und nach dem Auflegen (bzw. nach dem vorläufigen Ineingriffnehmen) der Montageabschnitt der Profilschiene in Höhenrichtung gegenüber einem Montageabschnitt des Haltebügels (insbesondere mittels Verschiebens zueinander) ausgerichtet werden, bevor der Montageabschnitt der Profilschiene an dem Montageabschnitt des Haltebügels fest und unverschiebbar montiert wird. Die Ausrichtung in der Höhenrichtung erfolgt zum Beispiel durch eine Parallelverschiebung zwischen den Montageabschnitten von Profilschiene und Haltebügel.

Gemäß einem exemplarischen Ausführungsbeispiel der Erfindung kann zum Montieren des Montageabschnitts der Profilschiene an dem Haltebügel eine Schraube durch ein Langloch in dem Haltebügel in den (zum Beispiel lochfreien) Montageabschnitt der Profilschiene geschraubt werden, insbesondere unter nachfolgender Verwendung einer Mutter. Alternativ sind andere Befestigungsformen möglich, wie zum Beispiel ein Vernageln, ein Vernieten, ein Verkleben oder ein Verklemmen.

Bei dem Verfahren kann ein Fixierelement mit vormontierter Schraube in die Profilschiene gesteckt werden, und die Schraube durch das Fixierelement, durch ein Langloch in dem Haltebügel und in den Montageabschnitt der Profilschiene geschraubt werden. Auf diese Weise kann mit wenigen Handgriffen, wenigen separaten Bauteilen und durch einen einzigen Monteur die Befestigung durchgeführt werden.

Gemäß einem bevorzugten Ausführungsbeispiel der Erfindung wird der Befestiger als Solarbefestiger eingesetzt. Somit kann der Befestiger ein Solarmodul, insbesondere eine Photovoltaikanlage oder einen thermischen Solarkollektor, auf einem Dach eines Hauses befestigen.

Im Folgenden werden exemplarische Ausführungsbeispiele der vorliegenden Erfindung mit Verweis auf die folgenden Figuren detailliert beschrieben.
Fig. 1 bis Fig. 5 zeigen unterschiedliche Ansichten einer Befestigungsanordnung gemäß einem exemplarischen Ausführungsbeispiel der Erfindung.
Fig. 6 bis Fig. 9 zeigen alternative Befestigungsanordnungen gemäß exemplarischen Ausführungsbeispielen der Erfindung.
Fig. 10 bis Fig. 16 zeigen unterschiedliche Montagezustände während des Durchführens eines Verfahrens zum Montieren eines Solarpaneels an einem Dach mittels einer Befestigungsanordnung gemäß einem exemplarischen Ausführungsbeispiel der Erfindung.
Fig. 17 bis Fig. 19 zeigen eine zu der gemäß Fig. 16 montierten Befestigungsanordnung ähnliche Befestigungsanordnung gemäß einem exemplarischen Ausführungsbeispiel der Erfindung.
Fig. 20 zeigt eine räumliche Ansicht und Fig. 21 zeigt eine Seitenansicht einer Haltebügelprofilschiene gemäß einem exemplarischen Ausführungsbeispiel der Erfindung.
Fig. 22 bis Fig. 26 zeigt unterschiedliche Ausführungsformen von als Dachhaken ausgestalteten Haltebügeln von Befestigungsanordnungen gemäß exemplarischen Ausführungsbeispielen der Erfindung.
Fig. 27 zeigt eine räumliche Ansicht eines Kabelhalterungsmoduls einer Befestigungsanordnung gemäß einem exemplarischen Ausführungsbeispiel der Erfindung.
Fig. 28 zeigt eine Seitenansicht des Kabelhalterungsmoduls aus Fig. 27 in einem Betriebszustand, in dem ein Kabel gerade in das Kabelhalterungsmodul eingeführt wird.
Fig. 29 zeigt eine räumliche Ansicht und Fig. 30 zeigt eine Seitenansicht einer Querprofilschiene einer Befestigungsanordnung gemäß einem exemplarischen Ausführungsbeispiel der Erfindung.
Fig. 31 zeigt eine räumliche Ansicht und Fig. 32 zeigt eine Seitenansicht eines Schienenverbinders einer Befestigungsanordnung gemäß einem exemplarischen Ausführungsbeispiel der Erfindung.
Fig. 33 zeigt eine Ansicht, bei der ein Bodenteil, eine Haltebügelprofilschiene und eine Querprofilschiene auf einer Dachsparre montiert sind.
Fig. 34 zeigt eine Anordnung, bei der zusätzlich zu Fig. 33 ein Solarpaneel mittels eines Überbrückungselements an der Anordnung gemäß Fig. 33 montiert ist.
Fig. 35 zeigt, wie eine Haltebügelprofilschiene und ein Haltebügel ausschließlich mittels einer selbstbohrenden Schraube aneinander befestigt sind.
Fig. 36 zeigt die Befestigung eines Bodenteils an einem Holzsparren eines Dachs einerseits und die Befestigung eines Haltebügels an dem Bodenteil andererseits.
Fig. 37 und Fig. 38 zeigen selbstbohrende Schrauben von Befestigungsanordnungen gemäß exemplarischen Ausführungsbeispielen der Erfindung.
Fig. 39 zeigt eine Befestigungsanordnung gemäß einem exemplarischen Ausführungsbeispiel der Erfindung.

Gleiche oder ähnliche Komponenten in unterschiedlichen Figuren sind mit gleichen Bezugsziffern versehen.

In einem einfachen Ausführungsbeispiel der Erfindung werden Dachhaken auf dem Dach montiert. Dann wird eine Profilschiene auf die montierten Dachhaken aufgelegt und durch einen Auflageabschnitt gehalten. Die Profilschiene kann danach in Höhenrichtung an dem Dachhaken ausgerichtet werden. Anschließend wird eine Schraube durch ein Langloch in dem Dachhaken in den Montageschenkel der Profilschiene geschraubt, um die Profilschiene an dem Dachhaken zu befestigen. Bevorzugt erfolgt dies über eine selbstbohrende und selbstschneidende Schraube, die durch das Langloch in dem Dachhaken in den Montageschenkel der Profilschiene geschraubt wird, um die Profilschiene an dem Dachhaken zu befestigen.

In diesem einfachen Ausführungsbeispiel ist die Verwendung eines Fixierelements entbehrlich. Stattdessen wird eine Schraube durch das Langloch im Dachhaken direkt in den Montageschenkel geschraubt, vorteilhaft unter nachfolgender Verwendung einer Mutter gekontert.

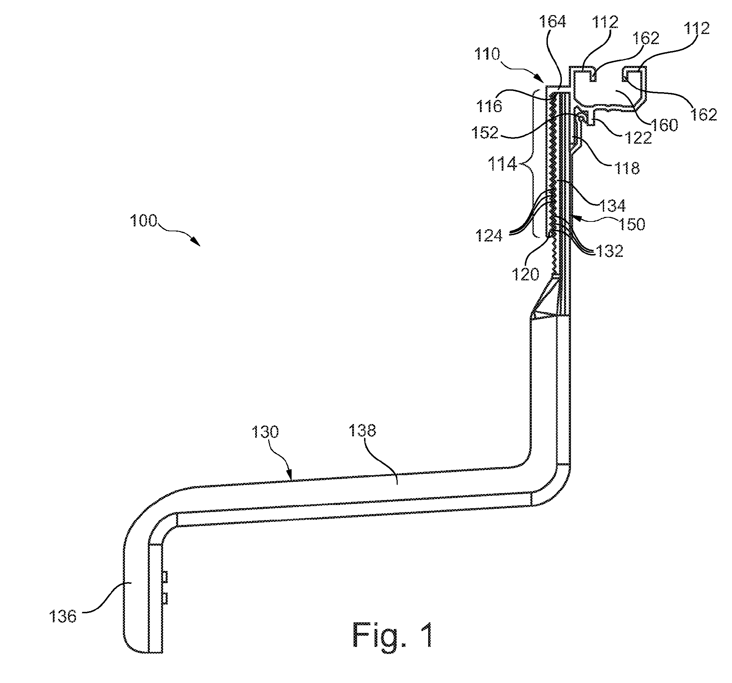

Im Weiteren wird Bezug nehmend auf Fig. 1 bis Fig. 5 eine Befestigungsanordnung 100 gemäß einem anderen exemplarischen Ausführungsbeispiel beschrieben.
**Fig. 1** zeigt eine Seitenansicht der Befestigungsanordnung 100 in einem Zustand, in dem eine Profilschiene 110 auf einem montierten Dachhaken 130 provisorisch aufliegt.

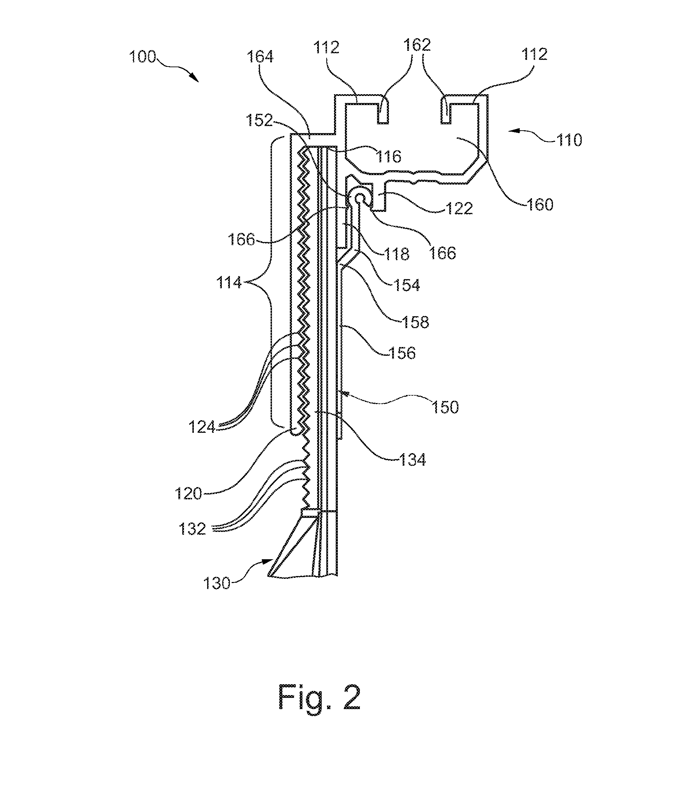

**Fig. 2** zeigt einen vergrößerten Ausschnitt der Befestigungsanordnung 100 in einer Seitenansicht in dem in Fig. 1 gezeigten Betriebszustand.

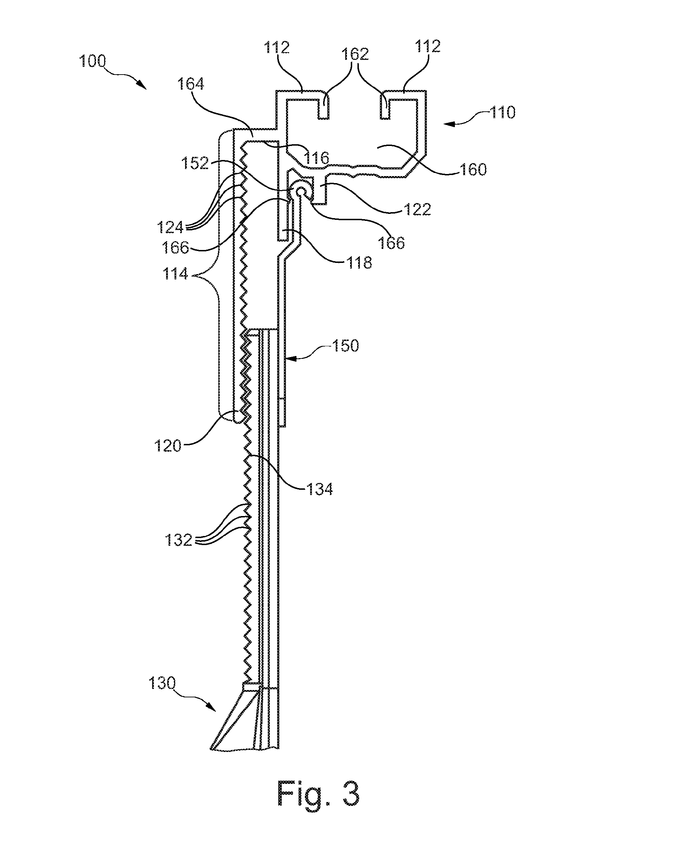

**Fig. 3** zeigt einen vergrößerten Ausschnitt der Befestigungsanordnung 100 in einer Seitenansicht und in einem Betriebszustand, in dem die Profilschiene 110 gegenüber dem Dachhaken 130 in vertikaler Richtung zum Einstellen einer Montagehöhe höhenverstellt wurde.

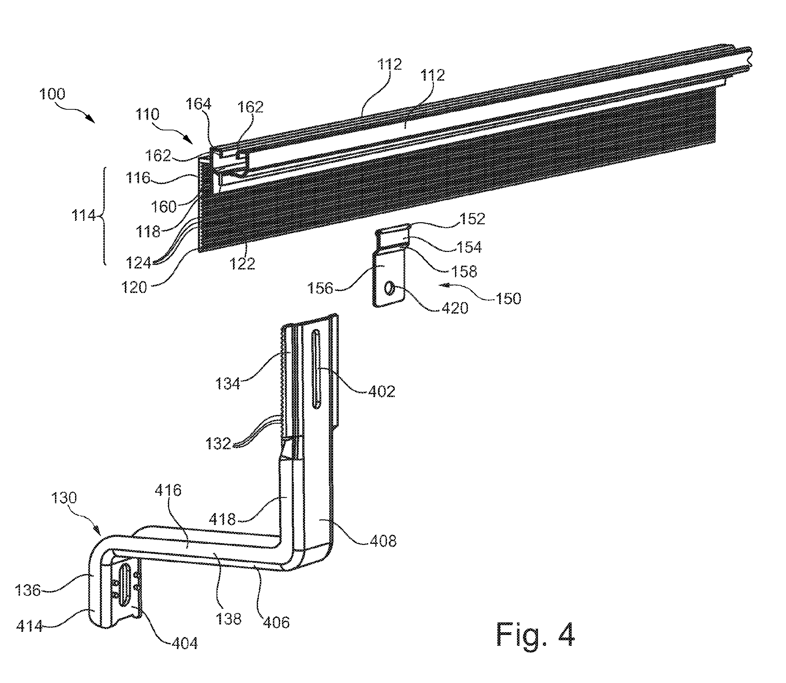

**Fig. 4** zeigt eine räumliche Ansicht der Profilschiene 110, des Dachhakens 130 und eines Fixierblechs 150 vor einer Montage dieser Komponenten aneinander.

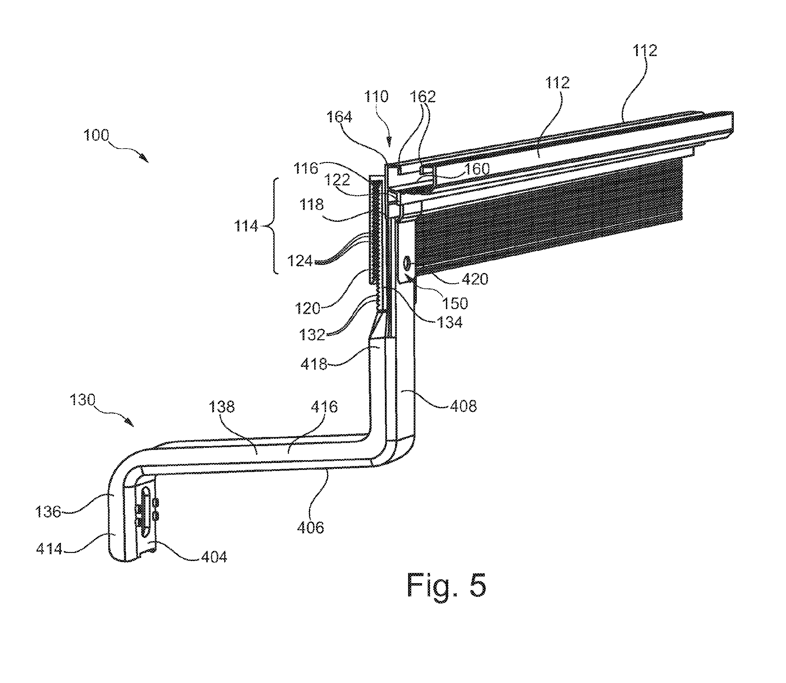

**Fig. 5** zeigt die Befestigungsanordnung 100 in einer räumlichen Darstellung nach Befestigung der Profilschiene 110, des Dachhakens 130 und des Fixierblechs 150 aneinander.

Die in Fig. 1 gezeigte Befestigungsanordnung 100 dient zum Befestigen eines nicht gezeigten Solarpaneels an einem nicht gezeigten Schrägdach. Die Befestigungsanordnung 100 weist die Profilschiene 110 zum Halten des Solarpaneels und zum Befestigen an einem an dem Dach befestigbaren Haltebügel 130 sowie diesen Haltebügel 130 selbst auf.

Die Profilschiene 110 weist einen Aufnahmeabschnitt 112 auf, der zum Halten des Solarpaneels eingerichtet ist. Die Profilschiene 110 weist ferner einen Montageabschnitt 114 auf, der zum Montieren an dem Haltebügel 130 eingerichtet ist. Die Profilschiene 110 weist darüber hinaus einen Auflageabschnitt 116, 118 auf, der zum Auflegen der Profilschiene 110 auf den Haltebügel 130 und zum vorläufigen Ineingriffnehmen des Haltebügels 130 vor dem endgültigen Montieren bzw. Befestigen des Haltebügels 130 an dem Montageabschnitt 114 eingerichtet ist.

Der Aufnahmeabschnitt 112 weist eine Nutenschiene zum Aufnehmen eines Nutensteins auf. Der Nutenstein kann, wie zum Beispiel aus Fig. 4 erkennbar ist, in einen langgestreckten Aufnahmeraum 160 der Nutenschiene eingeschoben werden. Dem Aufnahmeraum 160 ist durch zwei nach innen gebogene Biegekanten 162 Führung gegeben.

Der Montageabschnitt 114 der Profilschiene 110 weist einen plattenartigen Montageschenkel 120 auf, der parallel zu einem plattenartigen Eingriffsschenkel 118 des Auflageabschnitts 116, 118 verlaufend angeordnet ist. Allerdings ist die gemäß Fig. 1 vertikale Länge des Montageschenkels 120 größer als jene des Eingriffsschenkels 118. Der Montageschenkel 120 ist gegenüber dem Eingriffsschenkel 118 durch einen gemäß Fig. 1 horizontalen Abstandssteg 164 beabstandet. Die Ausdehnung des Abstandsstegs 164 ist so bemessen, dass ein Montageschenkel 134 des Dachhakens 130 in dem Zwischenraum zwischen dem Montageschenkel 120 und dem Eingriffsschenkel 118 mit etwas Spiel zum Manövrieren Platz findet.

Der Auflageabschnitt 116, 118 weist zusätzlich zu dem Eingriffsschenkel 118 eine durch den Abstandssteg 164 bereitgestellte Auflagefläche 116 auf, auf welche die Profilschiene 110 aufgelegt und ruhen kann, bevor eine eigentliche Verschraubung mit dem Haltebügel 130 erfolgt.

Die Profilschiene 110 der Befestigungsanordnung 100 weist einen zu dem Eingriffsschenkel 118 parallel angeordneten weiteren Eingriffsschenkel 122 auf. Ein Bereich zwischen dem Eingriffsschenkel 118 und dem weiteren Eingriffsschenkel 122 ist zum "Ineingriffnehmen" eines Fixierelements 150 ausgebildet. Die Fixierplatte 150 dient zum Fixieren der Profilschiene 110 an dem Haltebügel 130. Der Bereich zwischen dem Eingriffsschenkel 118 und dem weiteren Eingriffsschenkel 122 weist, wie in Fig. 2 am besten zu erkennen ist, seitlich gegenüberliegende Haltenasen 166 zum Einklipsen eines Hakens 152 des Fixierelements 150 auf.

Der Montageabschnitt 114 der Profilschiene 110 und ein Montageschenkel 134 des Haltebügels 130 sind aneinander formschlüssig anlegbar ausgebildet und weisen zu diesem Zweck an einander zugewandten Flächen korrespondierende Strukturmerkmale 124, 132 in Form von aufeinander angepassten Sägezahnprofilen auf (siehe Fig. 2). Diese dienen einer provisorischen Befestigung der Profilschiene 110 an dem Haltebügel 130 mit geringem Anpressdruck sowie einer Höheneinstellbarkeit. Zur Höheneinstellung werden unterschiedliche Sägezähne durch vertikale Relativverschiebung der Montageschenkel 120, 134 miteinander in Eingriff gebracht.

Eine selbstbohrende und selbstschneidende Verbindungschraube (nicht gezeigt) wird nach Einklipsen des Fixierelements 150 an die Profilschiene 110 durch ein Loch 420 des Fixierelements 150 geführt, wird durch ein Langloch 402 des Haltebügels 130 geführt, und schneidet sich schließlich selbst ein Gewinde beim nachfolgenden Durchdringen des Montageschenkels 120 der Profilschiene 110 (vgl. Fig. 4). Vorzugsweise kann eine solche selbstschneidende Schraube mittels einer Mutter oder dergleichen rückseitig an der Profilschiene 110 fixiert werden.

Das Fixierelement 150 weist, wie in Fig. 4 gezeigt, einen ersten Plattenabschnitt 154 und einen dazu parallel angeordneten zweiten Plattenabschnitt 156 auf. Die beiden Plattenabschnitte 154, 156 sind durch ein Schrägblech 158 (dessen Länge wesentlich kleiner sein kann als eine Länge der beiden Plattenabschnitte 154, 156) verbunden. Dadurch kann, wie am besten in Fig. 2 zu erkennen, der erste Plattenabschnitt 154 auf dem weiteren Eingriffsschenkel 122 anliegen und der zweite Plattenabschnitt 156 auf dem Montageschenkel 134 anliegen.

Der Haltebügel 130 weist einen Befestigungsabschnitt 136 und einen Montageabschnitt 134 auf. Der Befestigungsabschnitt 136 dient zum Befestigen an einem an der Unterlage befestigbaren Fußteil (nicht gezeigt). Der Montageabschnitt 134 des Haltebügels 130 dient zum Montieren an dem Montageabschnitt 114 der Profilschiene 110.

Zwischen dem Befestigungsabschnitt 136 und dem Montageabschnitt 134 ist ein Abstandsabschnitt 138 vorgesehen. Der Befestigungsabschnitt 136 und der Montageabschnitt 134 erstrecken sich entlang einer ersten Richtung (gemäß Fig. 1 eine Vertikale), die zu einer zweiten Richtung (gemäß Fig. 1 eine Horizontale) im Wesentlichen rechtwinklig abgewinkelt angeordnet ist. Im Wesentlichen entlang der zweiten Richtung verläuft der Abstandsabschnitt 138.

Wie am besten in Fig. 4 zu erkennen ist, weisen der Befestigungsabschnitt 136, der Montageabschnitt 134 und der Abstandsabschnitt 138 jeweils aneinandergrenzende Blechplattenabschnitte 404, 406, 408 auf, die zum Erhöhen der Tragstabilität abgewinkelte Versteifungskanten 414, 416, 418 aufweisen.

Zur Montage der Befestigungsanordnung 100 werden folgende Schritte durchgeführt:
1. Der Dachhaken oder Haltebügel 130 wird auf dem Dach montiert.
2. Die Profilschiene 110 wird auf den Dachhaken 130 so aufgelegt, dass der Dachhaken 130 in eine U-Form (vgl. Bezugszeichen 120, 116, 118) der Profilschiene 110 greift. Dadurch ist die Profilschiene 110 gegen seitlichen Versatz gesichert und vorjustiert.
3. Das Fixierungselement 150, vorzugsweise mit vormontierter Schraube (nicht gezeigt), wird nahe der Stelle in die Profilschiene 110 geklipst, an welcher der Dachhaken 130 positioniert ist. Die Schraube ist vorzugsweise eine selbstbohrende und selbstschneidende Schraube und bohrt sich später ein Loch in den Montageschenkel 120.
4. Die Höhe der Profilschiene 110 relativ zu dem Dachhaken 130 wird eingestellt, um Höhenunterschiede bei den Dachhaken 130 und dem Dach auszugleichen.
5. Die Schraube in dem Loch 420 des Fixierungselements 150 wird durch das Langloch 402 in dem Dachhaken 130 in den Montageschenkel 120 der Profilschiene 110 geschraubt. Dadurch wird der Montageschenkel 120 gegen den Dachhaken 130 gedrückt. Hierdurch ist eine große vertikale Kraftaufnahme möglich, da die Sägezahnprofile 124, 132 die vertikale Kraft gut aufnehmen.
6. Nun ist die Profilschiene 110 auf dem Dachhaken 130 dauerhaft und stabil montiert.
7. Schließlich erfolgt die Montage der Solarelemente (nicht gezeigt).

Vorteilhaft weist die Profilschiene 110 den Auflageabschnitt 116, 118 auf, mit dem die Profilschiene 110 auf die Dachhaken 130 aufgelegt werden kann (siehe Bezugszeichen 116). Der Auflageabschnitt 116, 118 weist ferner den vertikalen Steg 122 auf. Es kann eine U-Form vorgesehen werden (zur seitlichen Sicherung der Profilschiene 110). Eine Ein-Mann-Montage ist somit möglich. Der Montageschenkel 120 und der Dachhaken 130 weisen an den einander zugewandten Flächen eine Höheneinstellung auf, hier realisiert in Form eines Sägezahnprofils 124, 132. Alternativ kann zu diesem Zweck zum Beispiel ein Wellenprofil, ein Rechteckprofil, etc. vorgesehen werden.

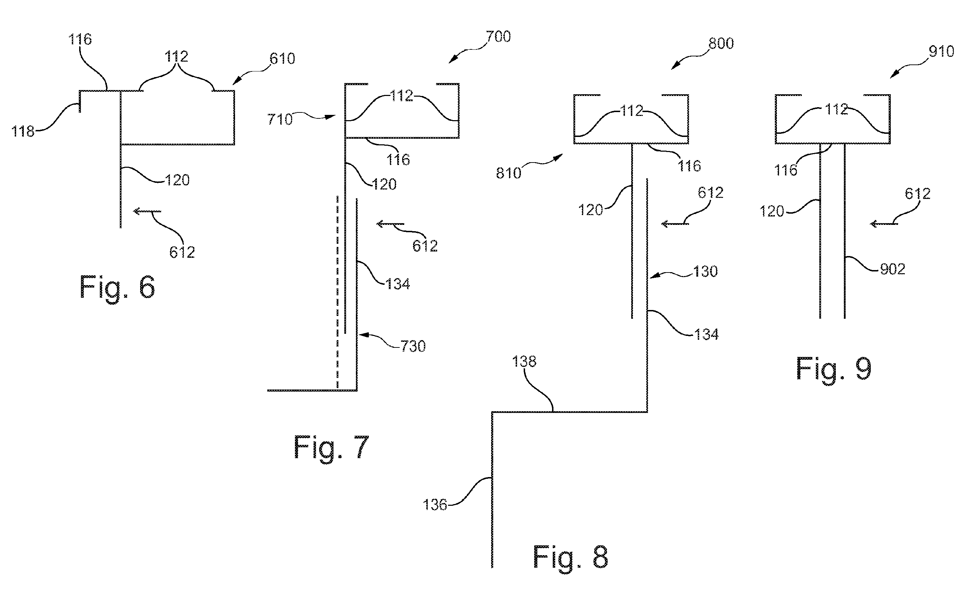

Das Fixierelement 150 verbindet die Profilschiene 110 mit dem Dachhaken 130 auf folgende Weise:
- Das Fixierelement 150 wird in die Profilschiene 110 eingeklipst.
- Das Fixierelement 150 stellt eine weitere Verbindung zwischen dem Dachhaken 130 und der Profilschiene 110 dar (Stützfunktion).
- Vorteilhaft ist eine Schraube an dem Fixierelement 150 schon vormontiert (beispielsweise über einen nicht gezeigten Kunststoffring).
Im Weiteren werden bezugnehmend auf Fig. 6 bis Fig. 9
Befestigungsanordnungen gemäß anderen exemplarischen Ausführungsbeispielen der Erfindung beschrieben. Auch diese Befestigungsanordnungen dienen als Solarbefestiger zum Befestigen von in der Figur nicht gezeigten Photovoltaikmodulen an einem Dach eines Hauses.

Bei einer in **Fig. 6** gezeigten Profilschiene 610 einer erfindungsgemäßen Befestigungsanordnung ist der Auflageabschnitt 116, 118 aus einer Auflagefläche 116 und einem vertikalen Steg 118 gebildet. Gemäß diesem Ausführungsbeispiel ist der Auflageabschnitt 116, 118 in einem oberen seitlichen Bereich des Aufnahmeabschnittes 112 angeformt. Mit einem Pfeil 612 ist eine Einschraubrichtung einer Schraube als Beispiel für ein Verbindungselement gezeigt.

Bei einer in **Fig. 7** gezeigten Profilschiene 710 einer erfindungsgemäßen Befestigungsanordnung 700 ist ersichtlich, dass ein Haltebügel 730 entweder auf derselben Seite des Montageschenkels 120, der auch der Aufnahmeabschnitt 112 zugewandt ist, ausgebildet werden kann, oder alternativ auf einer gegenüberliegenden Seite des Montageschenkels 120, welcher der Aufnahmeabschnitt 112 abgewandt ist. Letztere Alternative ist in Fig. 7 schematisch durch eine gestrichelte Linie angedeutet.

Bei einer in **Fig. 8** gezeigten Profilschiene 810 einer erfindungsgemäßen Befestigungsanordnung 800 ist der Montageschenkel 120 an einer Unterseite des Aufnahmeabschnitts 112 an zentraler Position, das heißt symmetrisch bezüglich des Aufnahmeabschnitts 112, ausgebildet.

Bei einer in **Fig. 9** gezeigten Profilschiene 910 einer erfindungsgemäßen Befestigungsanordnung ist der Auflageabschnitt durch eine Auflagefläche 116, einen ersten Montageschenkel 120 und einen zweiten Montageschenkel 902 gebildet. Ein in Fig. 9 nicht gezeigter Montageschenkel eines Haltebügels kann dann zwischen die beiden symmetrische angebrachten Montageschenkel 120, 902 eingeführt und auf dem Auflageabschnitt 116 aufliegen.

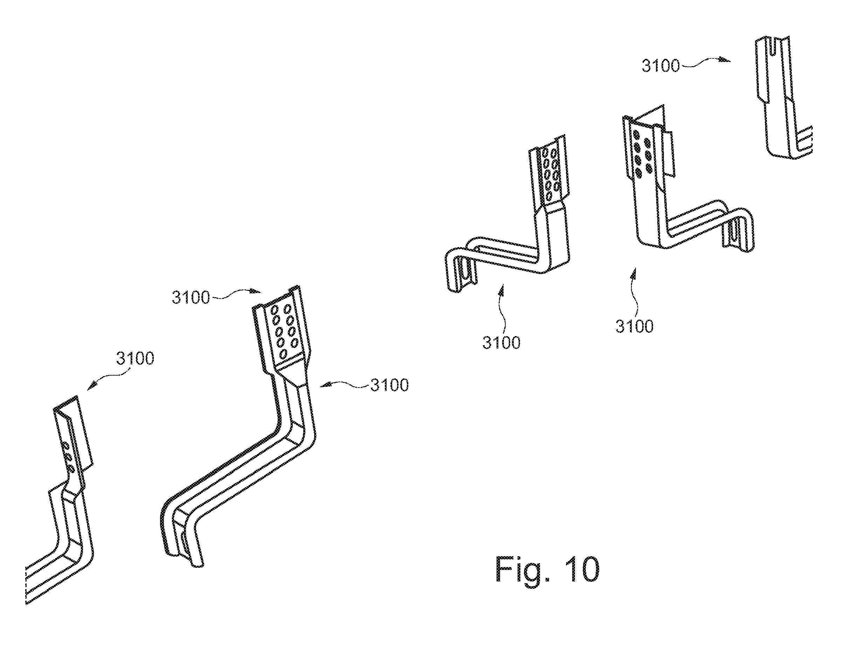

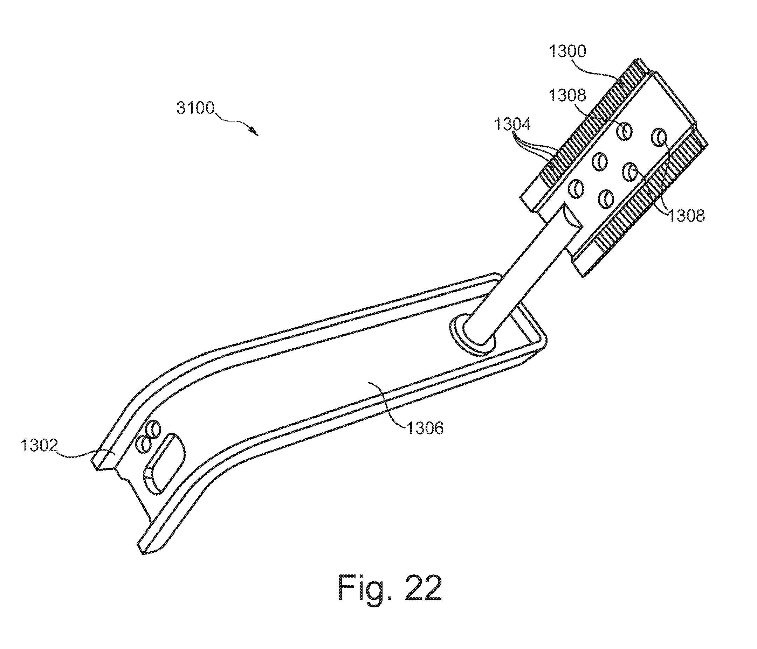

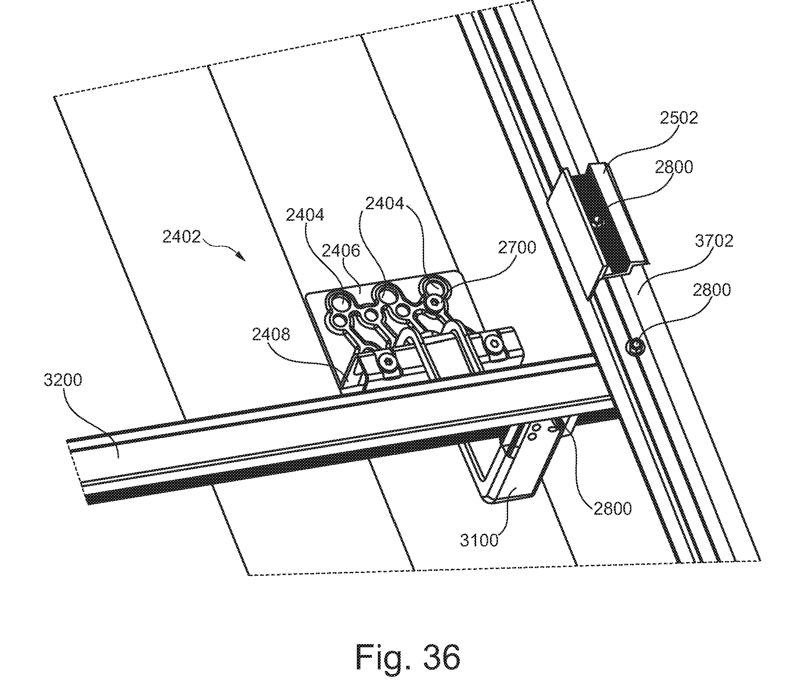

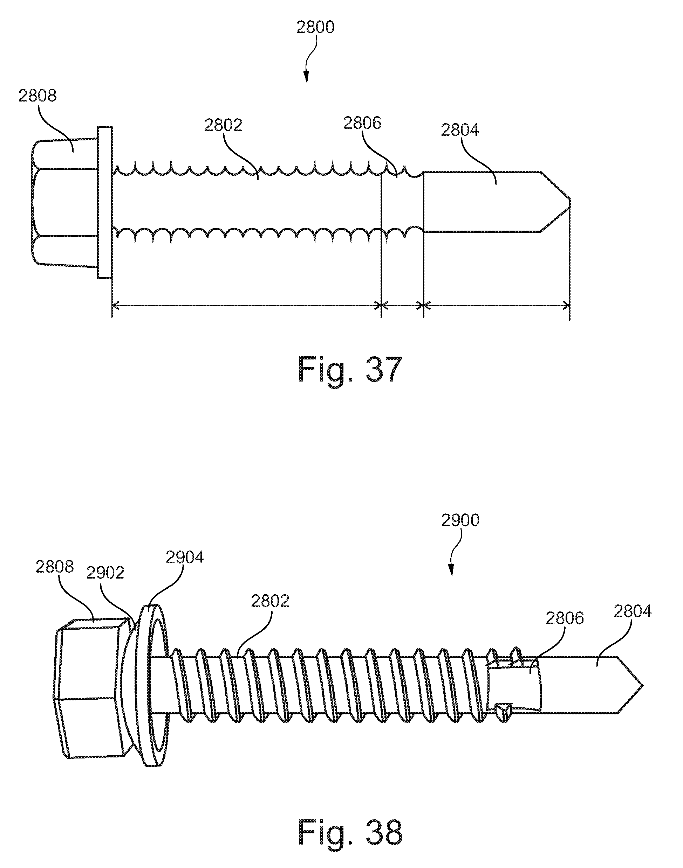

**Fig. 10** zeigt eine Anordnung von insgesamt fünf Haltebügeln 3100 unterschiedlicher Ausgestaltungen (siehe auch Fig. 22 bis Fig. 26), die zum Anbringen an einem in Fig. 10 nicht gezeigten Bodenteil (siehe auch Fig. 36) mittels einer selbstbohrenden Schraube (siehe auch Fig. 37 und Fig. 38) ausgestaltet sind.

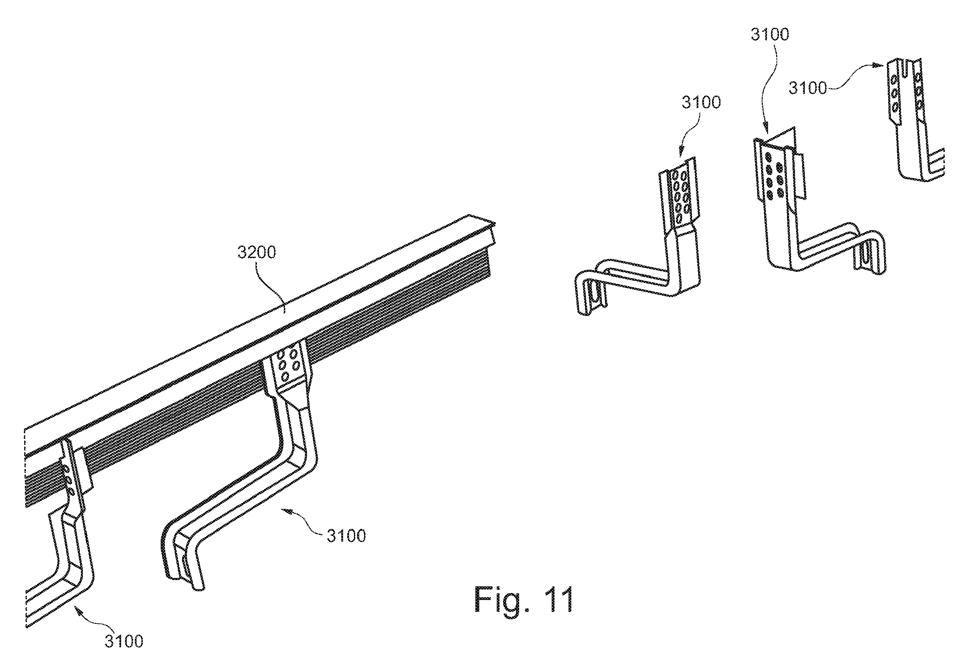

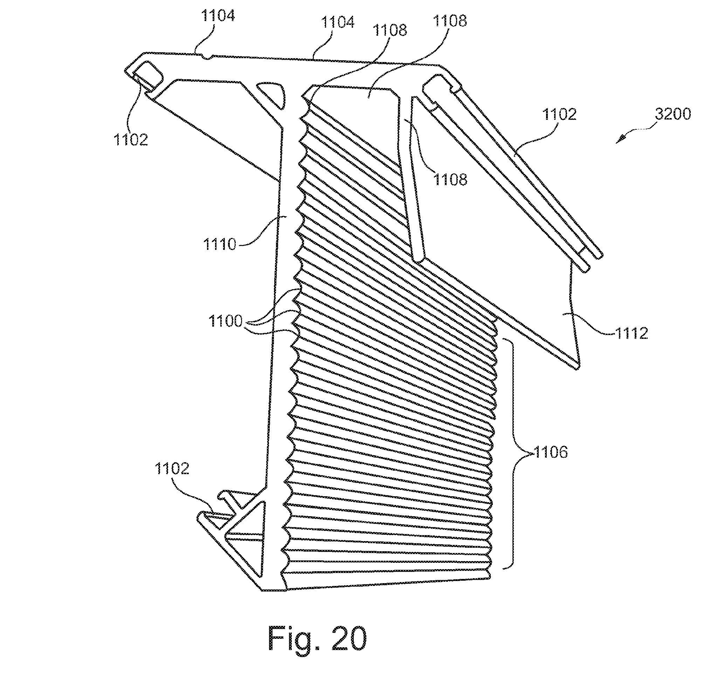

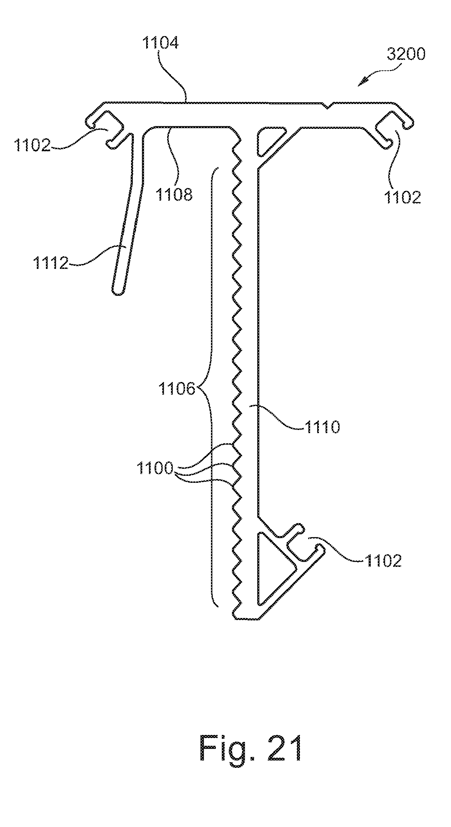

**Fig. 11** zeigt eine Anordnung, bei der eine erste Haltebügelprofilschiene 3200 (siehe auch Fig. 20 und Fig. 21) an zwei der Haltebügel 3100 angelegt ist. Mittels weiterer in Fig. 11 nicht gezeigter selbstbohrender Schrauben können die Haltebügel 3100 und die erste Haltebügelprofilschiene 3200 aneinander befestigt werden, indem die jeweilige selbstbohrende und selbstschneidende Schraube durch Löcher in dem Haltebügel 3100 hindurchgeführt und vorbohrungsfrei durch das Vollmaterial der ersten Haltebügelprofilschiene 3200 durchgebohrt wird.

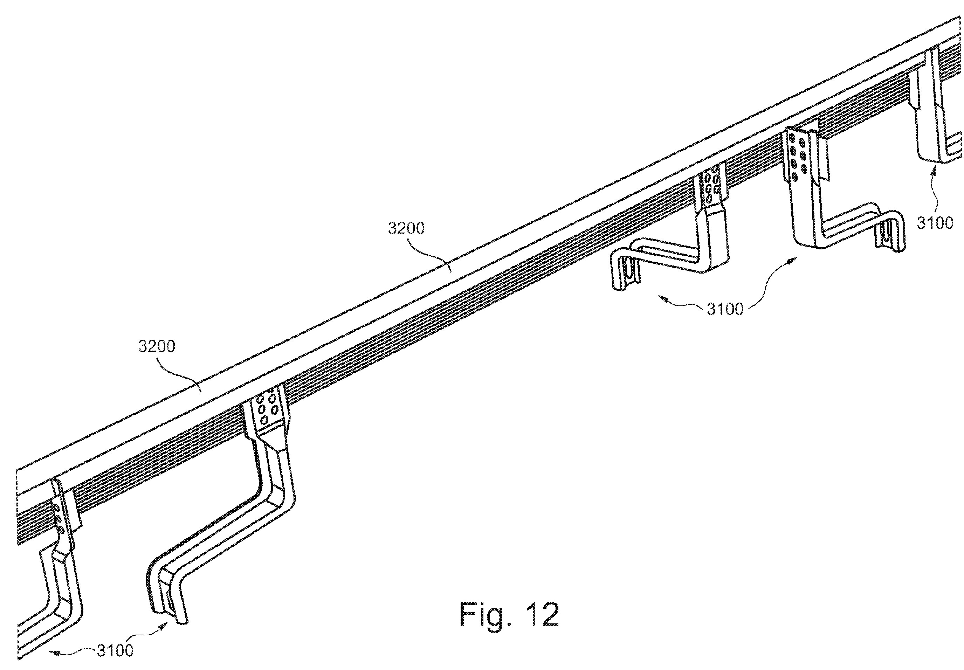

**Fig. 12** zeigt eine Anordnung, bei der an die erste Haltebügelprofilschiene 3200 eine zweite Haltebügelprofilschiene 3200 identischer Ausgestaltung lückenfrei angelegt bzw. angestückt ist und an drei andere der Haltebügel 3100 angelegt ist. Es können auch die drei anderen Haltebügel 3100 an der zweiten Haltebügelprofilschiene 3200 mittels jeweiliger in Fig. 12 nicht gezeigter Schrauben befestigt werden.

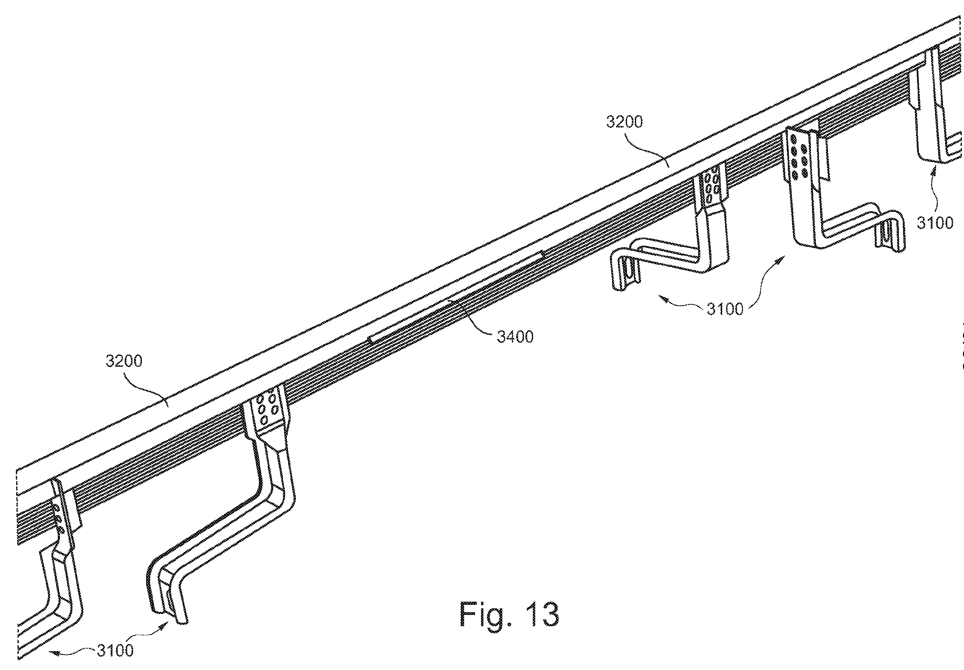

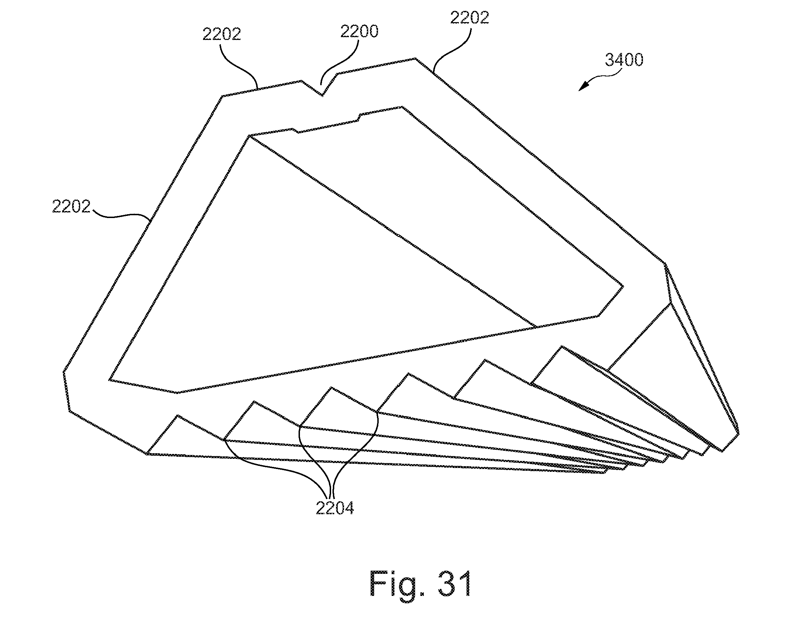

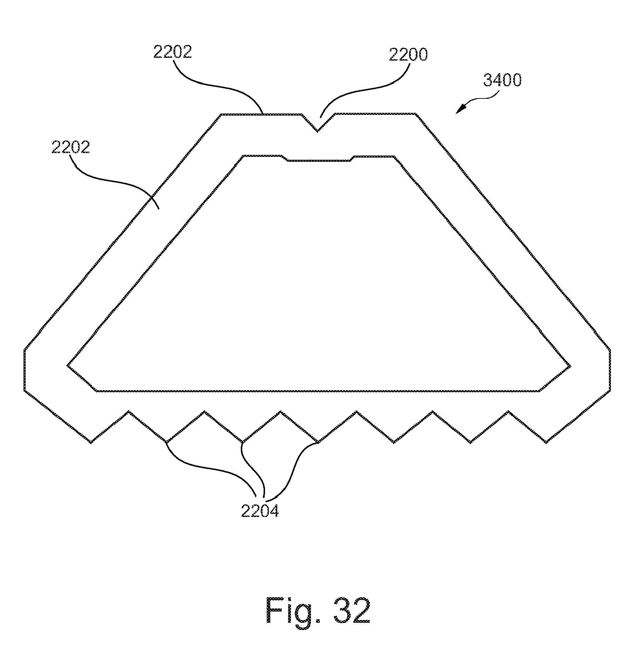

**Fig. 13** zeigt eine Anordnung, bei der ein Schienenverbinder 3400 (siehe auch Fig. 31 und Fig. 32) an die beiden Haltebügelprofilschienen 3200 diese überbrückend angelegt ist. Die Oberflächentexturen des Schienenverbinders 3400 und der korrespondierenden Anlegeflächen der Haltebügelprofilschienen 3200 sind aufeinander angepasst. Eine in Fig. 13 nicht gezeigte selbstbohrende und selbstschneidende Schraube kann vorbohrungsfrei durch den Schienenverbinder 3400 und eine jeweilige der Haltebügelprofilschienen 3200 durchgeschraubt werden, um die Haltebügelprofilschienen 3200 mittels des Schienenverbinders 3400 aneinander zu befestigen.

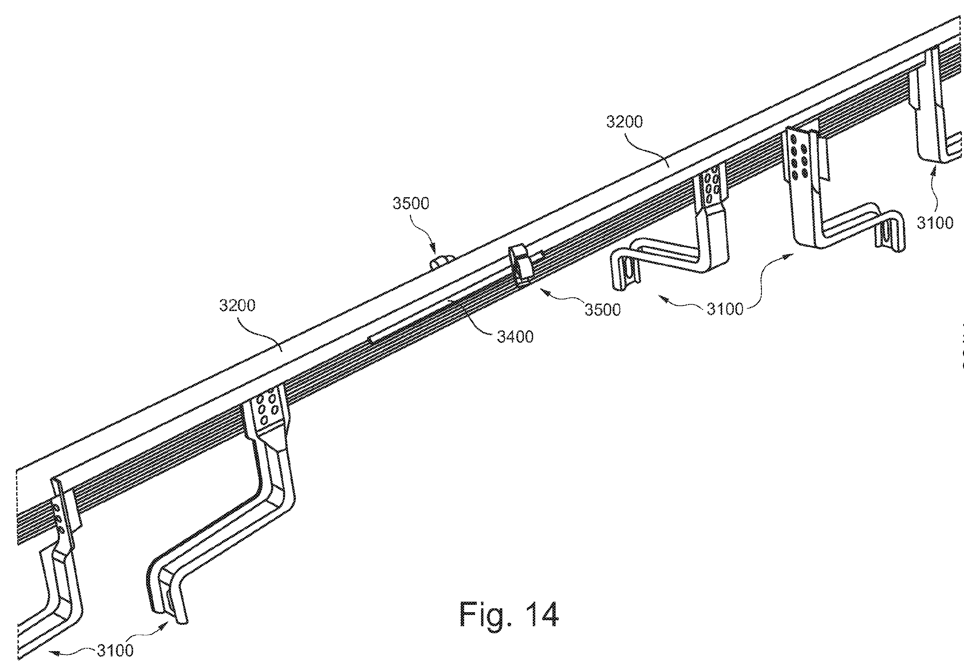

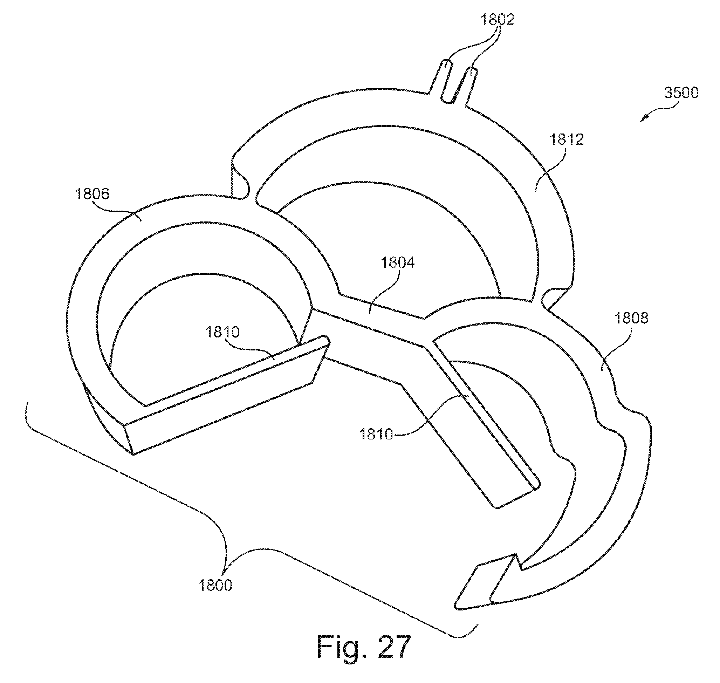

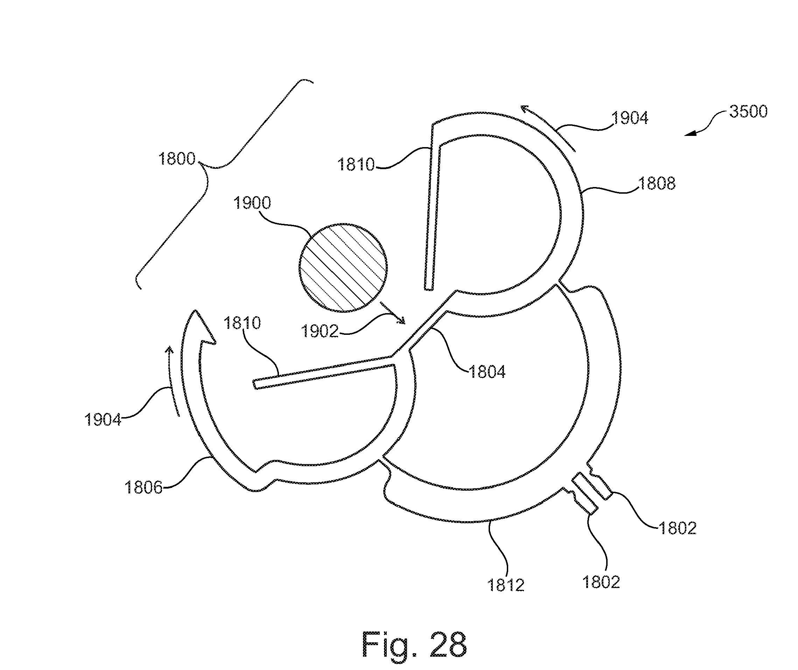

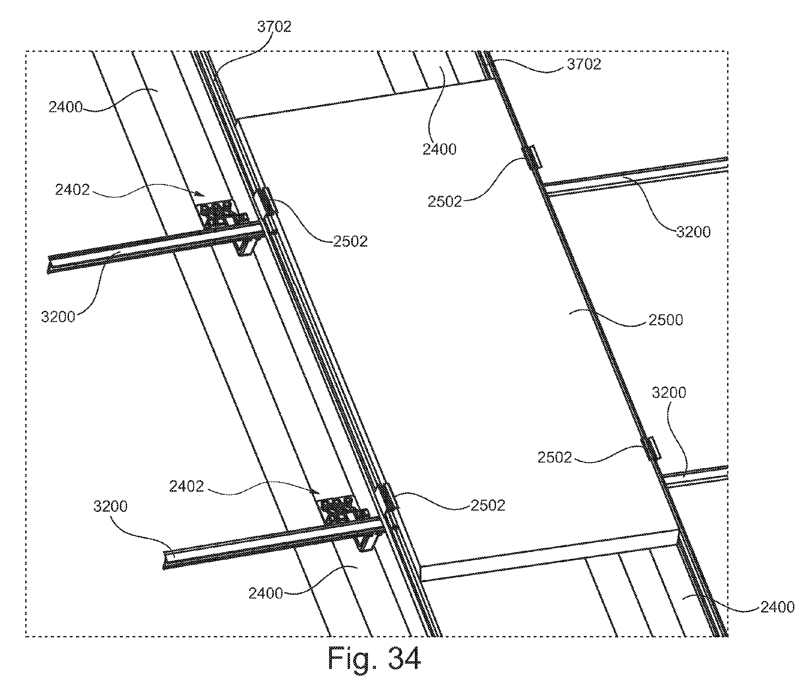

**Fig. 14** zeigt, dass zwei Kabelhalterungsmodule 3500 (siehe auch Fig. 27 und Fig. 28) an Steckbereiche der Haltebügelprofilschiene 3200 angesteckt worden sind. Die Kabelhalterungsmodule 3500 dienen zum Halten von in Fig. 14 nicht gezeigten Kabeln des zu montierenden Solarpaneels (siehe auch Fig. 34).

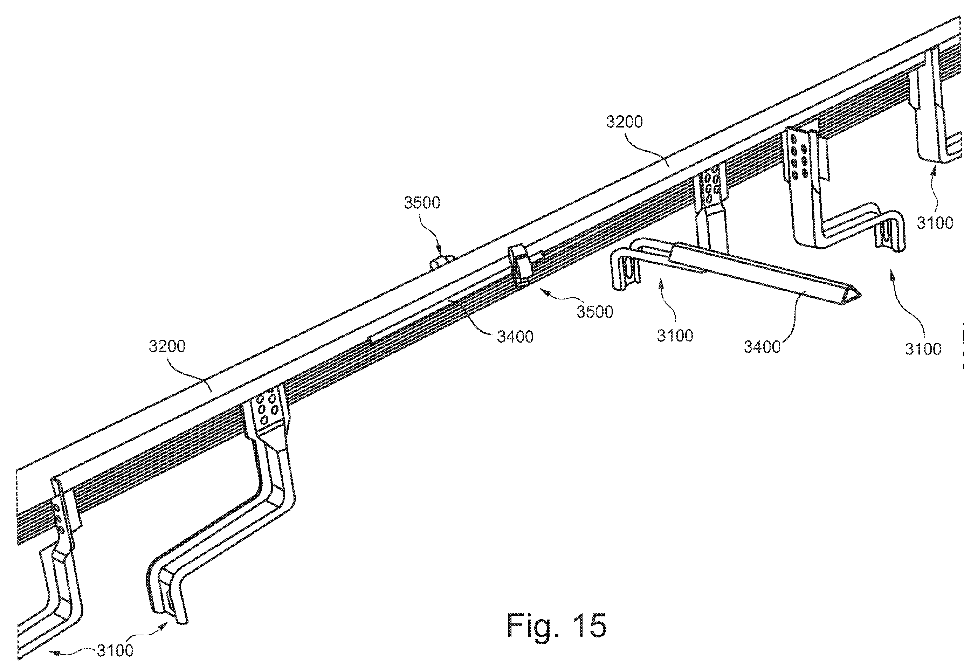

**Fig. 15** zeigt, dass zusätzlich ein weiterer Schienenverbinder 3400, der zu dem zum Befestigen der Haltebügelprofilschienen 3200 verwendeten Schienenverbinder 3400 identisch ist, vorbereitet wird.

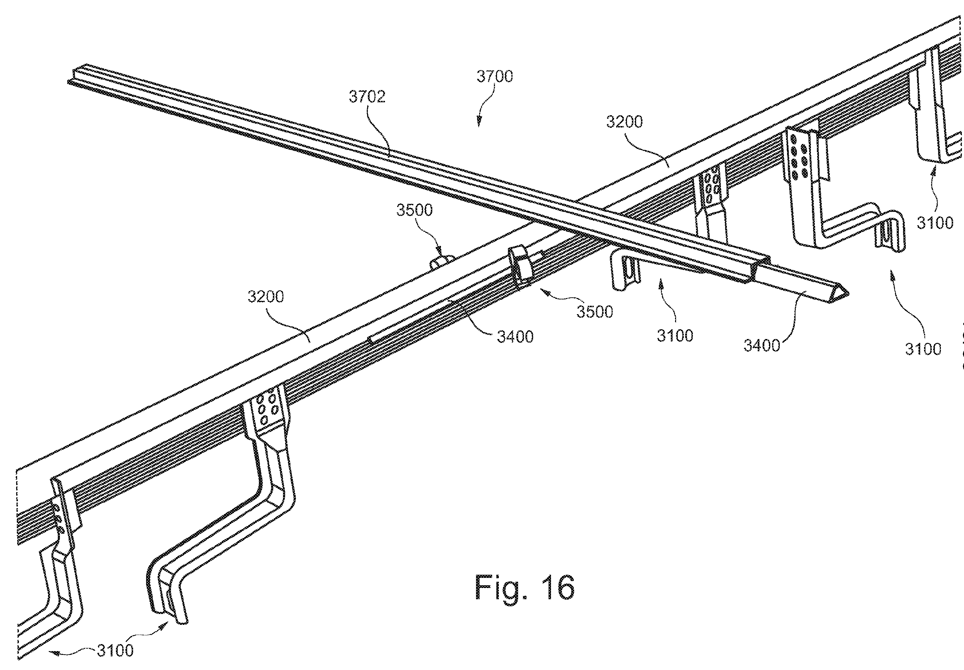

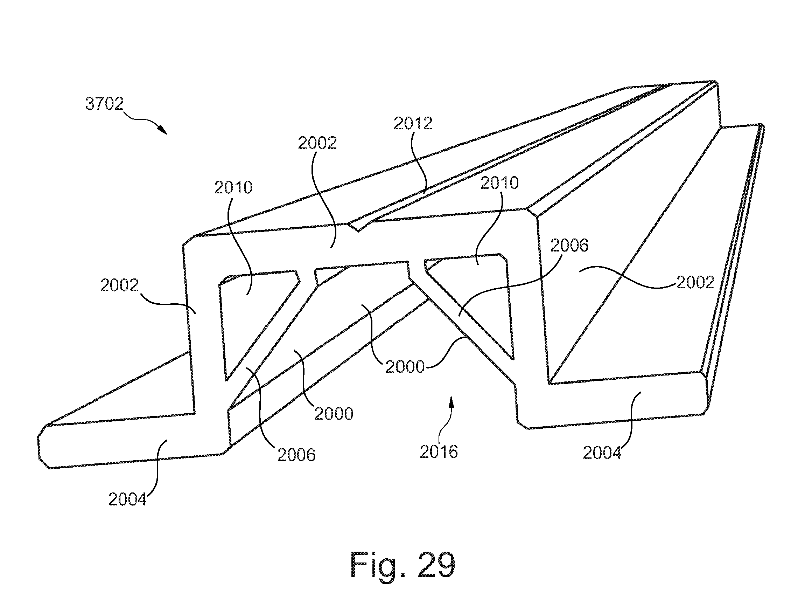

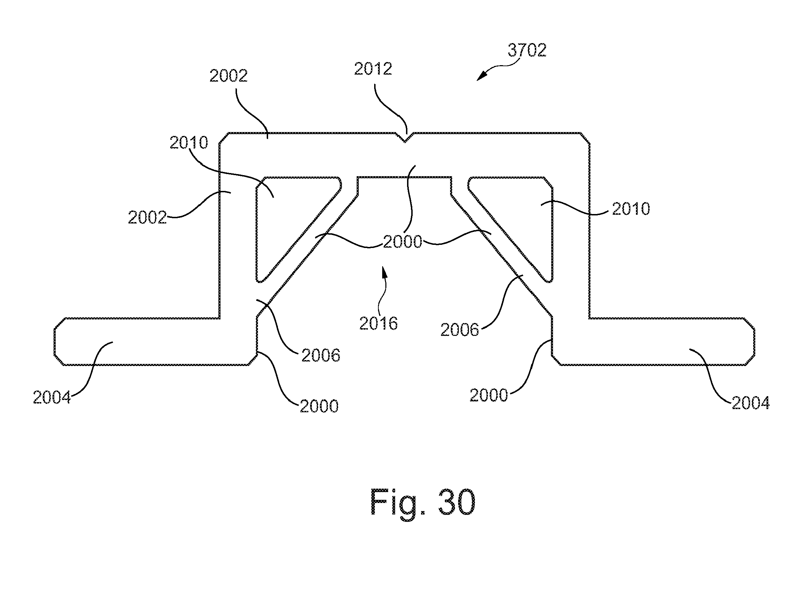

**Fig. 16** zeigt, dass eine Querprofilschiene 3702 (siehe auch Fig. 29 und Fig. 30) auf die Haltebügelprofilschienen 3200 aufgelegt worden ist und mittels einer in Fig. 16 nicht gezeigten selbstbohrenden und selbstschneidenden Schraube an der Haltebügelprofilschiene 3200 fest montiert ist. Ferner ist der in Fig. 15 gezeigte zweite Schienenverbinder 3400 ein Stück weit in das Innere der Querprofilschiene 3702 eingeschoben, um die Querprofilschiene 3702 mit einer weiteren in Fig. 16 nicht gezeigten anderen Querprofilschiene 3702 in einem vorgebbaren Abstand voneinander zu montieren. Dieser Abstand kann vorgegeben werden, indem der Schienenverbinder 3400 ein vorgebbares Stück weit in die Querprofilschienen 3702 eingeführt wird.

Somit ist oberhalb des Bodenteils, auf dem der Haltebügel 3100 montiert wird, bis hin zu dem Solarpaneel, das auf der Querprofilschiene 3702 montiert wird, jegliche Befestigungswirkung ausschließlich durch das Vorsehen von selbstbohrenden und selbstschneidenden Schrauben bewerkstelligt. Der Montageaufwand zum Montieren der Befestigungsanordnung 3700 gemäß Fig. 16 ist somit sehr gering und kann von einem einzigen Monteur durch Mitführen sehr weniger Werkzeuge und Bauteile bewerkstelligt werden.

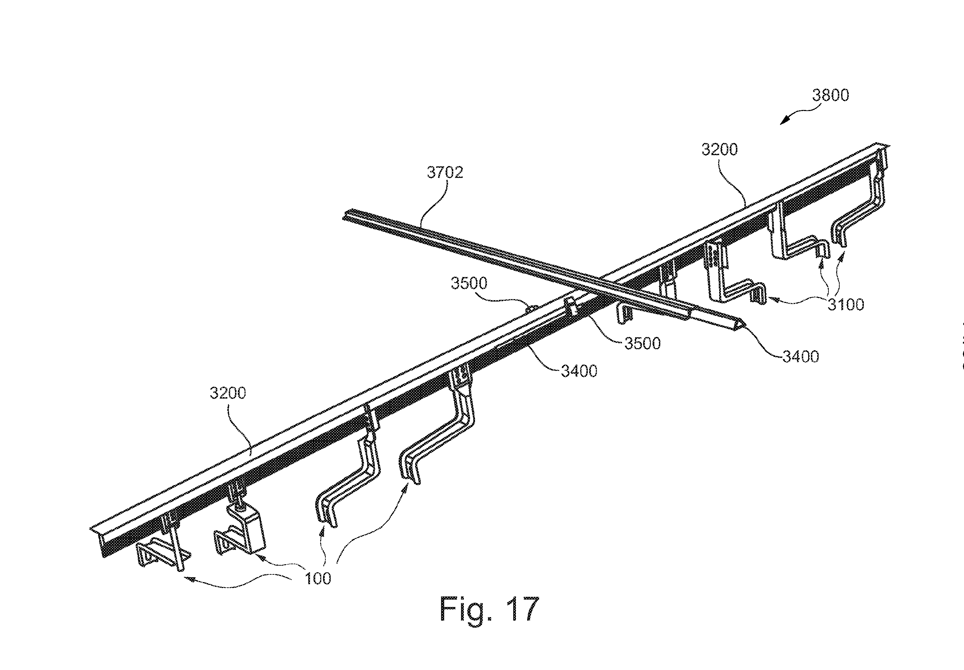

**Fig. 17** zeigt eine Befestigungsanordnung 3800, bei der zusätzlich zu den Komponenten gemäß Fig. 16 noch weitere hinzugefügt sind. Fig. 17 zeigt daher, dass es sich bei der erfindungsgemäßen Befestigungsanordnung 3800 um ein modulares System handelt, das durch einen Benutzer flexibel auf die Bedürfnisse des Einzelfalls hin zugeschnitten werden kann.

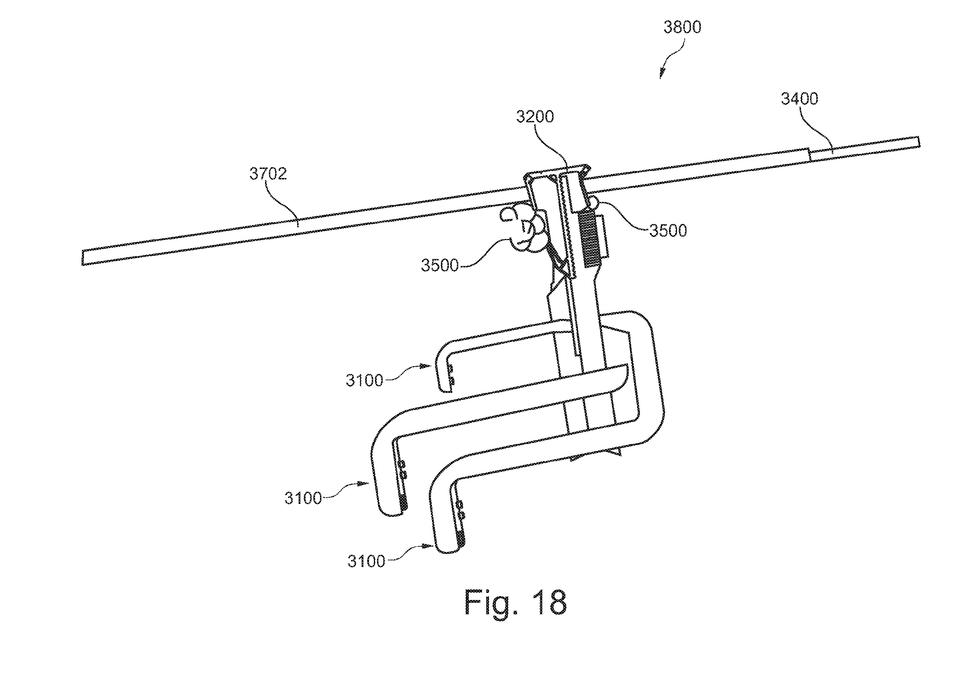

**Fig. 18** zeigt eine räumliche Ansicht der Befestigungsanordnung 3800 gemäß Fig. 17, bei der die Relativanordnung der Haltebügelprofilschiene 3200 bezüglich der Kabelhalterungsmodule 3500 besser ersichtlich ist.

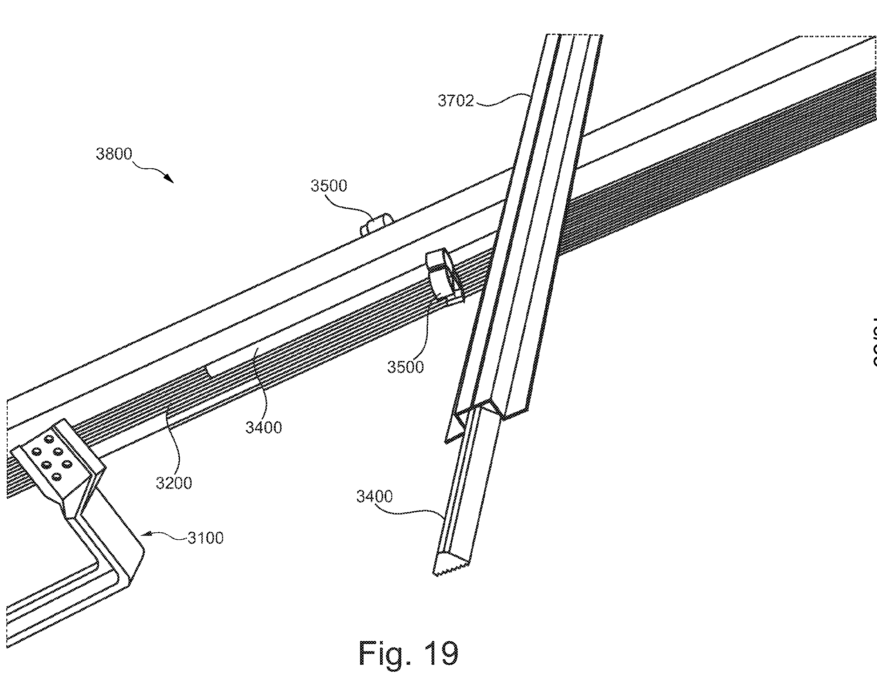

**Fig. 19** zeigt noch eine andere räumliche Ansicht der Befestigungsanordnung 3800, bei der die Querprofilschiene 3702 und der teilweise darin eingeschobene Schienenverbinder 3400 näher zeigt sind.

Im Weiteren wird bezugnehmend auf **Fig. 20** und **Fig. 21** der Aufbau der Haltebügelprofilschiene 3200 beschrieben.

Zunächst zeigt Fig. 20, dass bei der Haltebügelprofilschiene 3200 eine Außenflächentextur 1100 auf eine korrespondierende Außenflächentextur des Schienenverbinders 3400 (vgl. Bezugszeichen 2204 in Fig. 31 und Fig. 32) so angepasst ist, dass der Schienenverbinder 3400 formschlüssig an die Haltebügelprofilschiene 3200 anlegbar ist, um den Schienenverbinder 3400 und die Haltebügelprofilschiene 3200 nachfolgend mittels einer selbstbohrenden und selbstschneidenden Schraube aneinander zu verbinden.

Fig. 20 zeigt ferner, dass bei der Haltebügelprofilschiene 3200 eine Steckaufnahme 1102 vorgesehen ist, die mit einem Federstecker des Kabelhalterungsmoduls 3500 (vgl. Bezugszeichen 1802 in Fig. 27 und Fig. 28) versteckbar ist, um eine Steckverbindung auszubilden.

Ferner hat die Haltebügelprofilschiene 3200 einen als flächigen Plattenbereich oder Steg ausgebildeten Aufnahmeabschnitt 1104, der zum Aufnehmen der Querprofilschiene 3702 ausgestaltet ist. Zu diesem Zweck wird die Querprofilschiene 3702 von oben auf den Aufnahmeabschnitt 1104 aufgelegt. Nachfolgend wird eine selbstbohrende und selbstschneidende Schraube durch die Querprofilschiene 3702 und durch den Aufnahmeabschnitt 1104 gebohrt, womit die Verbindung zwischen diesen hergestellt ist.

Darüber hinaus enthält die Haltebügelprofilschiene 3200 einen Montageabschnitt 1106 mit Strukturmerkmalen 1100, der zum Montieren an dem Haltebügel 3100 eingerichtet ist.

Ein U-förmiger Auflageabschnitt 1108 dient dem Auflegen auf den Haltebügel 3100 vor dem Montieren des Haltebügels 3100 an dem Montageabschnitt 1106. Der Montageabschnitt 1106 weist einen Montageschenkel 1110 auf, der parallel zu einem Eingriffsschenkel 1112 des Auflageabschnitts 1108 verlaufend angeordnet ist. Ein Montageschenkel des Haltebügels 3100 (vgl. Bezugszeichen 1300 in Fig. 22) ist zwischen dem Montageschenkel 1110 und dem Eingriffsschenkel 1112 der Haltebügelprofilschiene 3200 einführbar. Der Montageschenkel des Haltebügels 3100 wird somit anschaulich seitlich zwischen den Komponenten 1110 und 1112 gehalten und nach oben hin von dem Auflageabschnitt 1108 gestützt.

Der Montageschenkel 1110 hat an einer Fläche, die im montierten Zustand dem Montageschenkel des Haltebügels 3100 zugewandt ist, die Außenflächentextur 1100 oder Strukturmerkmale in Form eines Dreiecksprofils, die mit Strukturmerkmalen des Haltebügels 3100 korrespondieren (vgl. Bezugszeichen 1304 in Fig. 22). Somit sind die beiden Montageschenkel von Haltebügelprofilschiene 3200 und Haltebügel 3100 aneinander formschlüssig bzw. reibschlüssig anlegbar.

Fig. 22 bis Fig. 26 zeigen unterschiedliche Ausgestaltungen eines als Dachhaken ausgebildeten Haltebügels 3100.

Der Haltebügel 3100 gemäß **Fig. 22** hat einen Befestigungsabschnitt 1302 und einen Montageabschnitt 1300. Der Befestigungsabschnitt 1302 dient zum Befestigen an dem an dem Dach befestigbaren Bodenteil. Der Montageabschnitt 1300 dient zum Montieren an dem Montageabschnitt 1106 der Haltebügelprofilschiene 3200. Der Haltebügel 3100 hat zwischen dem Befestigungsabschnitt 1302 und dem Montageabschnitt 1300 einen Abstandsabschnitt 1306. Der Befestigungsabschnitt 1302 und Montageabschnitt 1300 erstrecken sich entlang einer ersten Richtung, die zu einer zweiten Richtung im Wesentlichen rechtswinkelig abgewinkelt ist, in welcher zweiten Richtung der Abstandsabschnitt 1306 verläuft.

Wie ferner in Fig. 22 zu erkennen ist, enthält der Montageabschnitt 1300 Strukturmerkmale 1304 in Form von Dreieckprofilen, die auf die Textur oder Strukturmerkmale 1100 der Haltebügelprofilschiene 3200 angepasst sind. Somit kann der Montageabschnitt 1300 an dem Montageabschnitt 1106 angelegt werden, und anschließend kann eine selbstbohrende und selbstschneidende Schraube durch Durchgangsöffnungen 1308 des Haltebügels 3100 durchgeführt und vorbohrungsfrei durch den Montageschenkel 1110 der Haltebügelprofilschiene 3200 durchgebohrt werden, um den Haltebügel 3100 an der Haltebügelprofilschiene 3200 zu befestigen. Wie in Fig. 22 gezeigt, ist der Montageabschnitt 1300 gegenüber dem Abstandsabschnitt 1306 drehbar montiert.

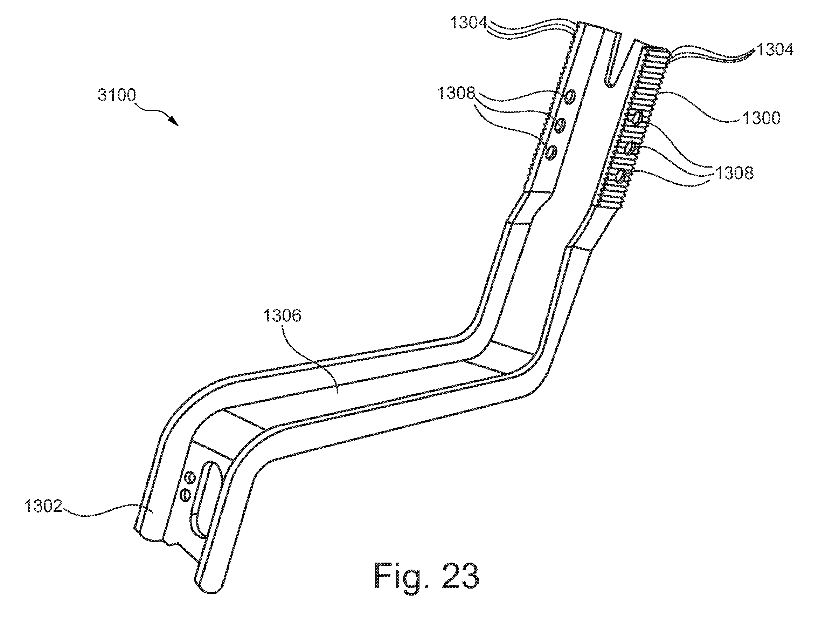

Während bei dem Haltebügel 3100 gemäß Fig. 22 die Befestigungsfläche des Montageabschnitts 1300 im Wesentlichen parallel zur Befestigungsfläche des Befestigungsabschnitts 1302 angeordnet ist, sind die Befestigungsflächen des Montageschenkels 1300 und des Befestigungselements 1302 gemäß **Fig. 23** zueinander im Wesentlichen orthogonal angeordnet. Ferner sind zwei sich gegenüberliegende Oberflächenbereiche des Montageabschnitts 1300 mit Strukturmerkmalen 1304 versehen, die zu den Strukturmerkmalen 1100 der Haltebügelprofilschiene 3200 korrespondierend vorgesehen sind, wodurch die Haltebügelprofilschiene 3200 an beiden Seiten angeordnet werden kann.

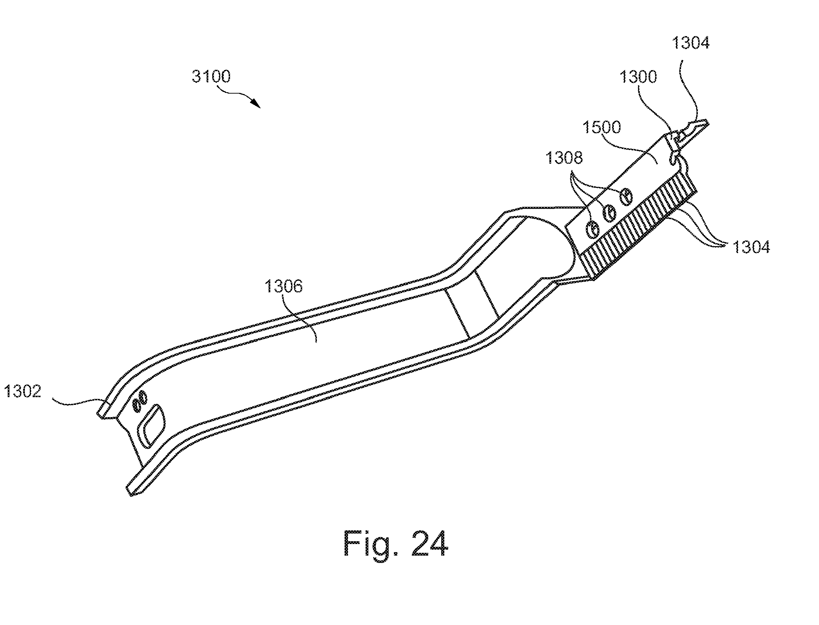

Die in **Fig. 24** gezeigte Ausführungsform des Haltebügels 3100 unterscheidet sich von den Ausführungsformen gemäß Fig. 22 und Fig. 23 dadurch, dass der Montageschenkel 1300 als Winkelprofil ausgebildet ist, der an den beiden Winkelschenkeln Strukturmerkmale 1304 aufweist. Zwischen den Strukturmerkmalen 1304 und einem Kantenbereich 1500 des als Winkelprofil ausgestalteten Montageschenkels 1300 sind die Befestigungslöcher 1308 gebildet. An dem Kantenbereich 1500 können Haltebügelprofilschienen 3200 und Querprofilschienen 3702 befestigt werden.

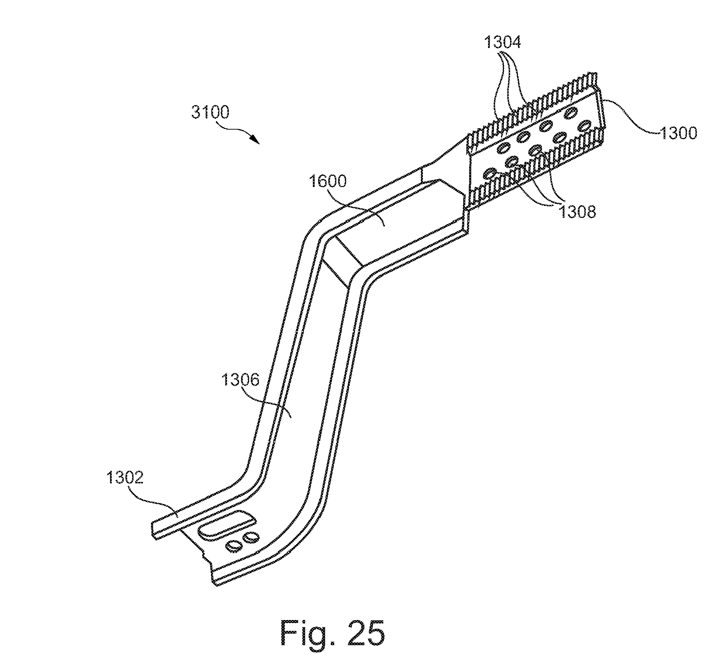

Die in **Fig. 25** gezeigte Ausführungsform eines Haltebügels 3100 unterscheidet sich von jener gemäß Fig. 22 insbesondere dadurch, dass der Montageschenkel 1300 rechtwinkelig zu einem angrenzenden flächenförmigen Abschnitt 1600 des Haltebügels 3100 orientiert ist, welcher Abschnitt 1600 den Abstandshalter 1306 und den Montageabschnitt 1300 überbrückt. Hier können Querprofilschienen 3702 befestigt werden.

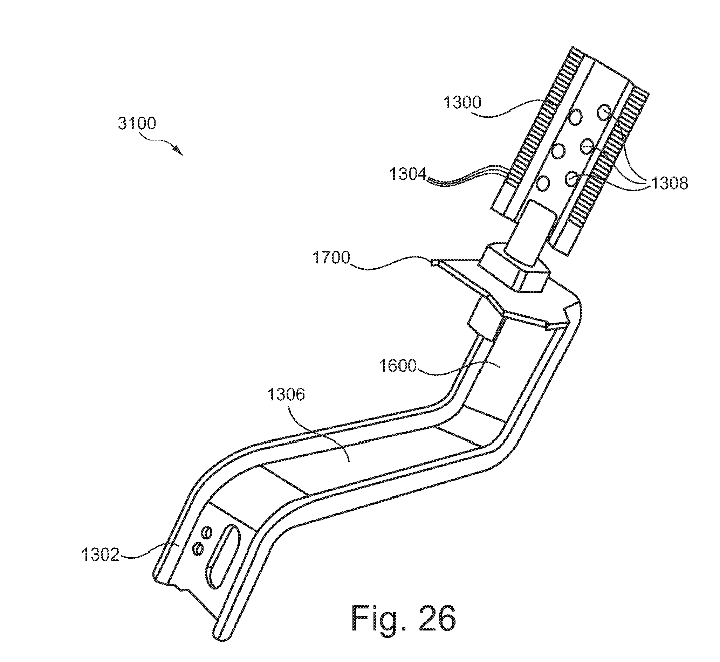

Der Haltebügel 3100 gemäß **Fig. 26** unterscheidet sich von dem Haltebügel 3100 gemäß Fig. 22 im Wesentlichen dadurch, dass gemäß Fig. 26 der Abschnitt 1600 sowie ein abgekanteter Plateauabschnitt 1700 vorgesehen ist, der parallel zu dem Abstandsabschnitt 1306 verläuft. Wie in Fig. 26 gezeigt, ist der Montageabschnitt 1300 gegenüber dem Plateauabschnitt 1700 drehbar montiert.

**Fig. 27** zeigt eine räumliche Detailansicht und **Fig. 28** zeigt eine Seitenansicht des Kabelhalterungsmoduls 3500.

Das Kabelhalterungsmodul 3500 enthält einen Kabelhaltebereich 1800 zum Halten eines Kabels des Solarpaneels und einen Federstecker 1802 zum Anstecken an die korrespondierend zu dem Federstecker 1802 ausgestaltete Steckaufnahme 1102 der Haltebügelprofilschiene 200.

Das Kabelhalterungsmodul 3500 enthält zwei mittels eines Stegs 1804 gekoppelte Hohlzylindersegmente 1806, 1808, die miteinander derart wirkverbunden sind, dass mittels Drückens eines Kabels gegen den Steg 1804 die zwei Hohlzylindersegmente 1806, 1808 zum Bilden eines umfänglich geschlossenen Kabelaufnahmebereichs verschwenkbar sind.

Fig. 28 zeigt, auf welche Weise ein Kabel 1900 gegen den Steg 1804 gedrückt wird (Pfeil 1902), um ein Umklappen der beiden Hohlzylindersegmente 1806, 1808 zu erreichen. Jedes der Hohlzylindersegmente 1806, 1808 weist einen Fortsatz 1810 auf. Die beiden Fortsätze 1810 sind konfiguriert, bei Schwenken der zwei Hohlzylindersegmente 1806, 1808 aufeinander zu (siehe Pfeile 1904), das in dem Kabelaufnahmebereich 1800 aufgenommene Kabel 1900 gemeinsam zu zentrieren.

Zusätzlich zu den beiden Hohlzylindersegmenten 1806, 1808 ist ein weiteres Hohlzylindersegment 1812 vorgesehen und mit den anderen beiden Hohlzylindersegmenten 1806, 1808 verbunden. Der Federstecker 1802 ist in einem mittigen Bereich des weiteren Hohlzylindersegments 1812 angeordnet.

**Fig. 29** zeigt eine räumliche Detailansicht und **Fig. 30** zeigt eine Seitenansicht der Querprofilschiene 3702.

Diese enthält ein abgekantetes U-Profil 2002 mit daran beidseitig einstückig anschließenden Seitenstegen 2004. Stützstreben 2006 verbinden einen oberen flächigen Abschnitt des abgekanteten U-Profils 2002 quer mit einem jeweiligen der Stege 2002, so dass im Querschnitt dreieckförmige Öffnungen 2010 an gegenüberliegenden Bereichen der Querprofilschiene 3702 gebildet sind. Durch die Streben 2006 und das abgekantete U-Profil 2002 ist ein Innenprofil 2000 gebildet, das mit einem Außenprofil des Schienenverbinders 3400 (vgl. Bezugszeichen 2202 in Fig. 31 und Fig. 32) derart korrespondiert, dass der Schienenverbinder 3400 in die Querprofilschiene 3702 ein vorgebbares Stück weit einschiebbar ist.

Ferner ist an einer Oberseite des abgekanteten U-Profils 2002 eine Führungsnut 2012 gebildet, die nach Einführen des Schienenverbinders 3400 in den Aufnahmeraum 2016 einen Ansatzpunkt für eine selbstbohrende gewindeschneidende Schraube bildet, die durch das abgekantete U-Profil 2002 und durch den in einem Aufnahmeraum 2016 aufgenommenen Schienenverbinder 3400 durchgebohrt werden kann, um diese beiden Komponenten aneinander zu befestigen.

In **Fig. 31** ist eine räumliche Detailansicht und in **Fig. 32** ist eine Seitenansicht des Schienenverbinders 3400 gezeigt.

Dieser weist zunächst eine Führungsnut 2200 auf, die nach Anlegen des Schienenverbinders 3400 an die Haltebügelprofilschiene 3200 dazu dient, eine selbstbohrende Schraube hindurchzubohren, um den Schienenverbinder 3400 an der Haltebügelprofilschiene 3200 zu befestigen. Hierbei dienen die korrespondierenden Strukturmerkmale 2204 des Schienenverbinders 3400 und 1100 der Haltebügelprofilschiene 3200 dazu, aneinander form- und reibschlüssig angelegt zu werden und nachfolgend ein Verbinden mittels der selbstbohrenden gewindeschneidenden Schraube zu erleichtern.

Ferner hat der Schienenverbinder 3400 ein Außenprofil 2202, das auf das Innenprofil 2000 der Querprofilschiene 3702 angepasst ist, so dass der Schienenverbinder 3400 in die Querprofilschiene 3702 benutzerdefiniert ein vorgebbares Stück weit einführbar ist.

Somit ist es mit dem Schienenverbinder 3400 möglich, sowohl eine Verbindung zu der Haltebügelprofilschiene 3200 als auch zu der Querprofilschiene 3702 herzustellen, so dass der Schienenverbinder 3400 auch als Universalschienenverbinder bezeichnet werden kann.

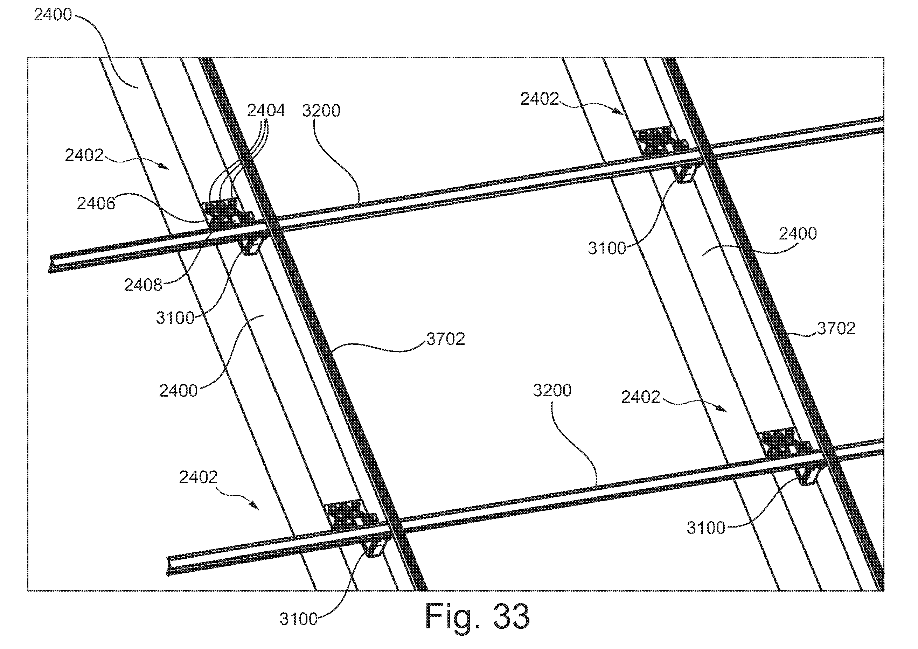

**Fig. 33** zeigt eine Anordnung, bei der an Holzdachsparren 2400 zunächst ein Bodenteil 2402 angebracht ist. Dies erfolgt mittels Holzschraubens, die in Schraubenöffnungen 2404 einer Bodenplatte 2406 des Bodenteils 2402 eingeschraubt werden. Ein sich von der Bodenplatte 2406 hin nach oben erstreckendes Teil 2408 dient zum Verschrauben des Bodenteils 2402 mit dem Haltebügel 3100, wozu gewindeschneidende selbstbohrende Schrauben verwendet werden. Der Haltebügel 3100 wird dann mit einer Haltebügelprofilschiene 3200 unter Verwendung selbstbohrender gewindeschneidender Schrauben verschraubt. Der Haltebügel 3200 wird nachfolgend unter Verwendung von selbstbohrenden gewindeschneidenden Schrauben mit der Querprofilschiene 3702 verschraubt.

Wie **Fig. 34** zeigt, kann nachfolgend ein Solarpaneel 2500 auf der Befestigungsanordnung befestigt wird. Hierbei ist entweder eine direkte Befestigung auf den Querprofilschienen 3702 oder, wie in Fig. 34 gezeigt, eine indirekte Befestigung mittels eines Überbrückungsstücks 2502 möglich, das mittels einer selbstbohrenden gewindeschneidenden Schraube an der Querprofilschiene 3702 befestigt wird und dabei befestigend auf das Solarpaneel 2500 gedrückt wird.

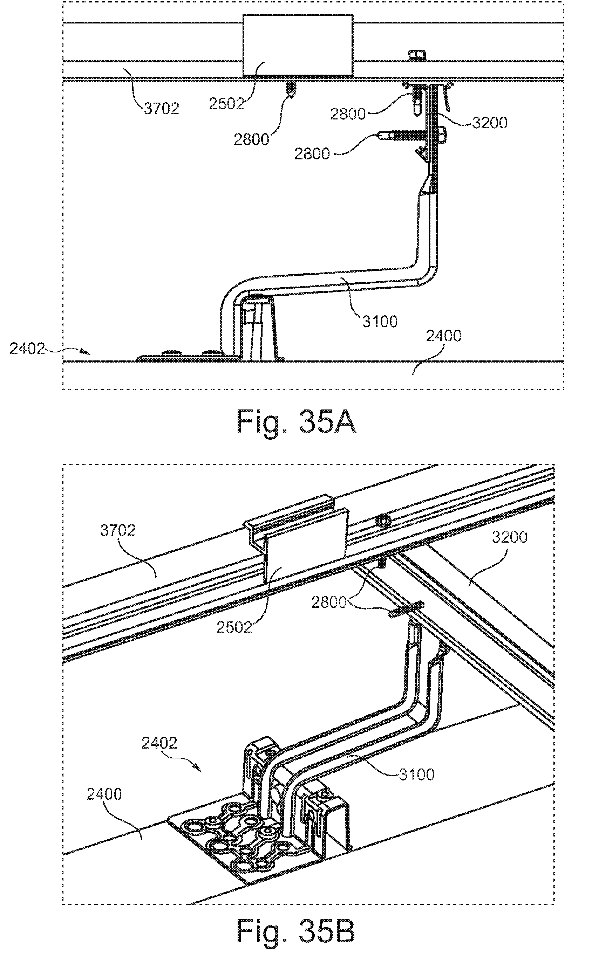

**Fig. 35** zeigt eine Detailansicht, welche exemplarisch eine Verbindung zwischen dem Haltebügel 3100 und der Haltebügelprofilschiene 3200 mittels einer selbstbohrenden gewindeschneidenden Schraube 2600 zeigt.

**Fig. 36** zeigt noch einmal eine vergrößerte Ansicht des Bodenteils 2402. Dieses ist mittels Holzschrauben 2700 mit den Dachsparren 2400 und mit einer selbstbohrenden gewindeschneidenden Schraube 2600 an dem Haltebügel 3100 befestigt.

**Fig. 37** zeigt eine selbstbohrende gewindeschneidende Schraube 2800, die zum Befestigen zweier beliebiger der oben beschriebenen Komponenten (Bodenteil, Haltebügel, Profilschienen, Überbrückungsstück, Solarpaneel, Schienenverbinder) aneinander verwendet werden kann.

Die Schraube 2800 hat einen Befestigungsbereich 2802, der rostbeständig ausgebildet ist, und der im montierten Zustand im Inneren von zumindest einer der anzubringenden Komponenten verbleibt. Ein Bohrbereich 2804 ist gehärtet und zum Durchbohren von mindestens einer der aneinander anzubringenden Komponenten eingerichtet. Ein Gewindeformbereich 2806 ist zwischen dem Befestigungsbereich 2802 und dem Bohrbereich 2804 angeordnet und dient zum Formen eines Gewindes in mindestens einer der aneinander anzubringenden Komponenten beim Durchbohren. Ferner hat die Schraube 2800 einen Kopfbereich 2808, an dem ein Schraubendreher in üblicher Weise eingreifen kann.

**Fig. 38** zeigt eine selbstbohrende Schraube 2900, die in einer Befestigungsanordnung gemäß einem anderen Ausführungsbeispiel verwendet werden kann. Diese unterscheidet sich von der Schraube 2800 durch das Vorsehen einer Sollbruchstelle 2902 zwischen dem Kopfbereich 2808 und dem Befestigungsbereich 2802. Wie in Fig. 38 gezeigt, ist die Sollbruchstelle dünner vorgesehen als der Rest der Schraube 2900 und schert deswegen bei Überschreiten einer mechanischen Sollbelastung, insbesondere eines Mindestdrehmoments ab, womit der Kopfbereich 2808 von dem restlichen Bereich der Schraube 2900 abtrennbar ist. Ein Betätigen der Schraube 2900 ist danach nicht mehr möglich, so dass das Abscheren als Diebstahlschutz zum Schützen vor dem unbefugten Entwenden eines montierten Solarpaneels dient. Ferner ist zwischen der Sollbruchstelle 2902 und dem Befestigungsbereich 2802 ein Aufweitungsabschnitt 2904 vorgesehen, der im montierten Zustand eine ähnliche Befestigungsfunktion erfüllt wie gemäß Fig. 37 der Kopfbereich 2808.

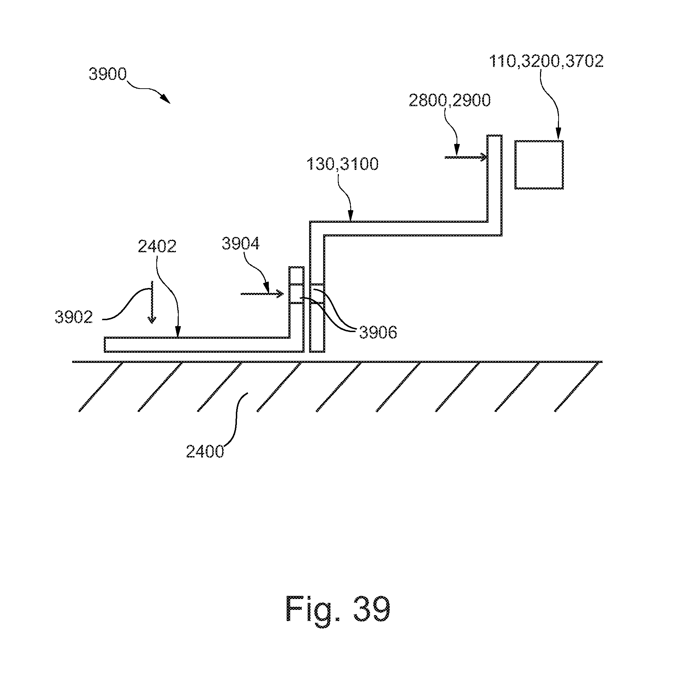

**Fig. 39** zeigt eine Befestigungsanordnung 3900 gemäß einem exemplarischen Ausführungsbeispiel der Erfindung.

Ein Bodenteil 2402, das zum Beispiel aus Edelstahl gefertigt sein kann, wird an Dachsparren 2400 mittels einer oder mehrerer Holzschrauben befestigt, wie schematisch mit Bezugszeichen 3902 gezeigt.

Ein Haltebügel 130, 3100, der zum Beispiel aus Edelstahl gefertigt sein kann, wird an dem Bodenteil 2402 mittels einer oder mehrerer Schrauben befestigt, wie schematisch mit Bezugszeichen 3904 gezeigt. Alternativ können Haltebügel 130, 3100 und Bodenteil 2402 auch einstückig ausgebildet sein. Diese Schrauben sind bei dem gezeigten Ausführungsbeispiel nicht selbstbohrend bzw. gewindeschneidend und können durch vorgeformte Bohrungen 3906 (insbesondere mit bereits geschnittenem Gewinde) durchgeführt werden. Die Befestigung des Haltebügels 130, 3100 an dem Bodenteil 2402 erfolgt bei diesem Ausführungsbeispiel nicht über eine selbstbohrende und gewindeschneidende Schraube, da beide Komponenten 130, 3100, 2402 aus Stahl gefertigt sind. Hier sind in die Komponenten 130, 3100, 2402 bereits Gewinde eingeschnitten.

Der Haltebügel 130, 3100 wird an einer in Fig. 39 schematisch gezeigten Profilschiene 110, 3200 oder 3702 befestigt, wobei diese Profilschiene 110, 3200 oder 3702 wahlweise eine Haltebügelprofilschiene oder eine Querprofilschiene sein kann. Zur Befestigung kann eine selbstschneidende und selbstbohrende Schraube 2800, 2900 eingesetzt werden.

Der Haltebügel 130, 3100 und das Bodenteil 2402 sind vorzugsweise entweder vormontiert oder einstückig ausgebildet, insbesondere wenn diese aus Stahl hergestellt sind. Ein Selbstbohren oder Selbstschneiden ist dann nur schwer möglich.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Profilschiene (110, 3200) zum Halten eines Gegenstands und zum Befestigen an einem an einer Unterlage, insbesondere einem Dach, befestigbaren Haltebügel (130, 3100), wobei die Profilschiene (110, 3200) aufweist:
einen Aufnahmeabschnitt (112, 1104), der zum Halten des Gegenstands eingerichtet ist;
einen Montageabschnitt (114, 1106), der zum Montieren an dem Haltebügel (130, 3100) eingerichtet ist;
einen Auflageabschnitt (116, 118, 1108), der zum Auflegen der Profilschiene (100, 3200) auf den Haltebügel (130, 3100) und zum vorläufigen Ineingriffnehmen des Haltebügels (130, 3100) vor dem endgültigen Montieren des Haltebügels (130, 3100) an dem Montageabschnitt (114, 1106) eingerichtet ist.

2. Profilschiene (110) nach Anspruch 1, wobei der Aufnahmeabschnitt (112) eine Nutenschiene aufweist, insbesondere eine Nutenschiene zum Aufnehmen eines Nutensteins, oder als Steg (1104) gebildet ist.

3. Profilschiene (110, 3200) nach Anspruch 1 oder 2, wobei der Montageabschnitt (114, 1106) der Profilschiene (110, 3200) einen Montageschenkel (120, 1110) aufweist, der parallel zu einem Eingriffsschenkel (118, 1112) des Auflageabschnitts (116, 118, 1108) verlaufend angeordnet ist, so dass ein Montageschenkel (134) des Haltebügels (130, 3100) zwischen den Montageschenkel (120, 1110) der Profilschiene (110, 3200) und den Eingriffsschenkel (118, 1112) einführbar ist.

4. Profilschiene (110, 3200) nach einem der Ansprüche 1 bis 3, wobei der Auflageabschnitt (116, 118, 1108) eine durch einen Abstandssteg (164) bereitgestellte Auflagefläche (116, 1108) aufweist, auf welche die Profilschiene (110) aufgelegt werden und ruhen kann, bevor eine eigentliche Verschraubung mit dem Haltebügel (130) erfolgt, wobei der Abstandssteg (164) insbesondere rechtwinklig zu dem Montageabschnitt (114, 1106) orientiert ist.

5. Profilschiene (3200) nach einem der Ansprüche 1 bis 4, wobei der Aufnahmeabschnitt (1104) als flächiger Plattenbereich oder als Steg ausgestaltet ist, welcher senkrecht zu dem Montageabschnitt (1106) orientiert ist, so dass eine Querprofilschiene (3702) von oben auf den Aufnahmeabschnitt (1104) auflegbar ist.

6. Profilschiene (110) nach Anspruch 3, ferner aufweisend einen zu dem Eingriffsschenkel (118) parallel angeordneten weiteren Eingriffsschenkel (122), wobei ein Bereich zwischen dem Eingriffsschenkel (118) und dem weiteren Eingriffsschenkel (122) zum Ineingriffnehmen eines Fixierelements (150) zum Fixieren der Profilschiene (110) an dem Haltebügel (130) ausgebildet ist, wobei insbesondere der Bereich zwischen dem Eingriffsschenkel (118) und dem weiteren Eingriffsschenkel (122) zum formschlüssigen oder reibschlüssigen Einklipsen eines Hakens (152) des Fixierelements (150) ausgebildet ist.

7. Profilschiene (110, 3200) nach einem der Ansprüche 1 bis 6, wobei der Auflageabschnitt als Eingriffsabschnitt (116, 118, 1108) ausgestaltet ist, der zum Ineingriffnehmen des Haltebügels (130, 3100) vor Montieren oder Fixieren des Haltebügels (130, 3100) an dem Montageabschnitt (114, 1106) eingerichtet ist.

8. Befestigungsanordnung (100, 3700) zum Befestigen eines Gegenstands an einer Unterlage, insbesondere einem Dach, wobei die Befestigungsanordnung (100, 3700) aufweist:
eine Profilschiene (110, 3200) nach einem der Ansprüche 1 bis 7 zum Halten des Gegenstands und zum Befestigen an einem an der Unterlage befestigbaren Haltebügel (130, 3100); und
den Haltebügel (130, 3100) zum Befestigen an der Unterlage.

9. Befestigungsanordnung (100) nach Anspruch 8, aufweisend das Fixierelement (150), das, um den Haltebügel (130) an der Profilschiene (110) zu fixieren, an der Profilschiene (110) anbringbar und nachfolgend an dem Haltebügel (130) befestigbar ist, wobei insbesondere das Fixierelement (150) und die Profilschiene (110) korrespondierende Steckmerkmale (124, 132) aufweisen, so dass das Fixierelement (150) an die Profilschiene (110) ansteckbar ist.

10. Befestigungsanordnung (100) nach Anspruch 8 oder 9, wobei dem Fixierelement (150) ein Verbindungselement zugeordnet ist, das zum Befestigen des Haltebügels (130) an der Profilschiene (110) mittels Durchführens des Verbindungselements durch den Haltebügel (130) und durch die Profilschiene (110) eingerichtet ist, insbesondere das Verbindungselement an dem Fixierelement (150) vormontiert bzw. mittels eines Montagerings vormontiert ist.

11. Befestigungsanordnung (3700) nach einem der Ansprüche 8 bis 10,
wobei die Befestigungsanordnung (3700) ein Bodenteil (2402) zum Anbringen an der Unterlage aufweist, wobei der Haltebügel (3100) zum Anbringen an dem Bodenteil (2402) mittels eines ersten Befestigungsmittels (2800) eingerichtet ist, und/oder
wobei die Profilschiene (200) zum Anbringen an dem Haltebügel (3100) mittels eines zweiten Befestigungsmittels (2800) eingerichtet ist.

12. Befestigungsanordnung (3700) nach Anspruch 11, wobei das erste Befestigungsmittel (2800) und/oder das zweite Befestigungsmittel (2800) eine selbstbohrende Schraube ist oder sind, die durch die jeweiligen aneinander anzubringenden Komponenten (2402, 3100, 3200) schraubbar ist oder sind, wobei die selbstbohrende Schraube (2800) insbesondere
einen Befestigungsbereich (2802), insbesondere einen rostbeständigen Befestigungsbereich, hat, der im montierten Zustand innerhalb zumindest einer der aneinander anzubringenden Komponenten (2402, 3100, 3200) verbleibt; und
einen Bohrbereich (2804), insbesondere einen gehärteten Bohrbereich, hat, zum Durchbohren von mindestens einer der aneinander anzubringenden Komponenten (2402, 3100, 3200),
wobei die selbstbohrende Schraube (2900) weiter insbesondere
einen Kopfbereich (2808) zum Angreifen eines Schraubendrehers hat; eine Sollbruchstelle (2902) hat, die zwischen dem Kopfbereich (2808) und einem restlichen Bereich der Schraube (2900) angeordnet ist und eingerichtet ist, bei Überschreitung einer vorgebbaren mechanischen Sollbelastung während des Montierens abzuscheren, womit der Kopfbereich (2808) von dem restlichen Bereich abtrennbar ist.

13. Verwendung einer Profilschiene (110, 3200) nach einem der Ansprüche 1 bis 7 oder einer Befestigungsanordnung (100, 3700) nach einem der Ansprüche 8 bis 12 zum Befestigen eines Solarpaneels an einem Dach.

14. Verfahren zum Befestigen eines Gegenstands an einer Unterlage, insbesondere einem Dach, wobei das Verfahren aufweist:
Befestigen eines Haltebügels (130, 3100) an der Unterlage;
Auflegen eines Auflageabschnitts (116, 118, 1104) einer Profilschiene (110, 3200) auf den Haltebügel (130, 3100) vor Montieren oder Befestigen des Haltebügels (130, 3100) an einem Montageabschnitt (114, 1106) der Profilschiene (110, 3200), wobei die Profilschiene (110, 3200) eine semistabile Position einnimmt;
nach Einnahme der semistabilen Position, Justieren der Profilschiene (110, 3200) hin an eine endgültige Position;
nach der Justierung der Profilschiene (110, 3200) hin an die endgültige Position, dauerhaftes Montieren oder Befestigen des Montageabschnitts (114, 1106) der Profilschiene (110, 3200) an dem Haltebügel (130, 3100);
Befestigen des Gegenstands an einem Aufnahmeabschnitt (112, 1104) der Profilschiene (110, 3200).

15. Verfahren nach Anspruch 14, wobei nach dem Auflegen der Montageabschnitt (114, 1106) der Profilschiene (110) in Höhenrichtung gegenüber einem Montageabschnitt (132) des Haltebügels (130) ausgerichtet wird, bevor der Montageabschnitt (114, 1106) der Profilschiene (110) an dem Montageabschnitt (132) des Haltebügels (130, 3100) montiert oder befestigt wird.
